(19) Europäisches Patentamt / European Patent Office / Office européen des brevets

(11) **EP 3 206 412 A1**

(12) **EUROPÄISCHE PATENTANMELDUNG**

(43) Veröffentlichungstag:
**16.08.2017 Patentblatt 2017/33**

(51) Int Cl.:
***H04Q 9/00*** *(2006.01)*

(21) Anmeldenummer: **17155436.3**

(22) Anmeldetag: **09.02.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **12.02.2016 DE 102016202204**
**20.07.2016 DE 102016213239**

(71) Anmelder: **Fraunhofer-Gesellschaft zur Förderung der angewandten Forschung e.V.**
**80686 München (DE)**

(72) Erfinder:
• **Schühler, Mario**
**91090 Effeltrich (DE)**
• **Weisgerber, Lars**
**02727 Ebersbach-Neugersdorf (DE)**
• **Arendt, Johannes**
**91054 Erlangen (DE)**
• **Wansch, Rainer**
**91083 Baiersdorf (DE)**
• **Milosiu, Heinrich**
**91056 Erlangen (DE)**
• **Oehler, Frank**
**91325 Adelsdorf (DE)**
• **Sauerer, Josef**
**91074 Herzogenaurach (DE)**

(74) Vertreter: **Hersina, Günter et al**
**Schoppe, Zimmermann, Stöckeler Zinkler, Schenk & Partner mbB Patentanwälte**
**Radlkoferstrasse 2**
**81373 München (DE)**

(54) **VORRICHTUNG ZUR KOMMUNIKATION MIT KOMMUNIKATIONSVORRICHTUNGEN, ENTSPRECHENDE KOMMUNIKATIONSVORRICHTUNG UND VERFAHREN**

(57) Die Erfindung bezieht sich auf eine Vorrichtung (1) zur Kommunikation mit Kommunikationsvorrichtungen (10). Dabei weist die Vorrichtung (1) eine Sendevorrichtung (2), eine Empfangsvorrichtung (3) und eine Steuervorrichtung (4) auf. Die Empfangsvorrichtung (3) empfängt Signale (101, 103). Die Steuervorrichtung (4) gibt einen Raumbereich (11, 13) vor, in den die Sendevorrichtung (2) Signale (100, 102) aussendet. Weiterhin bezieht sich die Erfindung auf eine Kommunikationsvorrichtung und ein entsprechendes Verfahren.

Fig. 1

EP 3 206 412 A1

**Beschreibung**

Die Erfindung bezieht sich auf eine Vorrichtung zur Kommunikation mit Kommunikationsvorrichtungen, auf eine Kommunikationsvorrichtung sowie auf ein Verfahren zur Kommunikation zwischen einer Vorrichtung zur Kommunikation und mindestens einer Kommunikationsvorrichtung.

Im Stand der Technik ist es bekannt, z. B. im Bereich der Logistik oder Produktion Waren oder allgemein Objekte mit RFID-Tags (von radio-frequency identification) oder RFID-Transpondern zu versehen. Durch RFID-Lesegeräte oder RFID-Reader lassen sich Identifikationsdaten aus den RFID-Tags auslesen. Aussagen über die Position der Objekte ergeben sich beispielsweise durch eine geringe Reichweite der Lesegeräte oder dadurch, dass die Lesegeräte das Passieren von Toren überwachen.

Eine schnelle Ermittlung von mit RFID-Tags versehenen Objekten in einem Raum ist daher nicht möglich. Auch wäre eine Kommunikation mit ausgesuchten Objekten sehr aufwändig.

Die Aufgabe der Erfindung besteht daher darin, eine Kommunikation mit beliebig in einem Raum verteilten Objekten möglichst effektiv zu erlauben.

Die Aufgabe löst die Erfindung mit einer Vorrichtung zur Kommunikation mit Kommunikationsvorrichtungen, mit Kommunikationsvorrichtungen sowie mit einem entsprechenden Verfahren zur Kommunikation. Die Erfindung beschreibt insgesamt auch ein Kommunikationssystem, das sich aus der besagten Vorrichtung und mindestens einer Kommunikationsvorrichtung ergibt.

Die Erfindung erlaubt es insbesondere, dass viele Objekte in einem bestimmten großen Raum drahtlos durch eine zentrale Funkeinheit als einer Ausgestaltung der Vorrichtung erreichbar sind. Der Abstand zwischen der zentralen Funkeinheit und den Objekten kann dabei je nach Ausgestaltung mehr als 10 Meter betragen, wobei die Orte der Objekte, ihre funktechnische Erreichbarkeit bzw. überhaupt ihre Anwesenheit innerhalb des Raumes zunächst nicht bekannt sind. In einer Ausgestaltung sind die Objekte mit stromsparenden Funkempfängern z. B. Wake-Up-Receivern (vergleiche die Offenlegungsschrift DE 10 2009 047 199 A1) mit Stromaufnahmen unter 20 $\mu$A als Teil der Kommunikationsvorrichtung ausgerüstet.

Die Erfindung löst die Aufgabe mit einer Vorrichtung zur Kommunikation mit Kommunikationsvorrichtungen. Die Vorrichtung weist eine Sendevorrichtung, eine Empfangsvorrichtung und eine Steuervorrichtung auf. Die Empfangsvorrichtung ist derartig ausgestaltet, Signale zu empfangen. Die Steuervorrichtung ist derartig ausgestaltet, einen Raumbereich vorzugeben, in den die Sendevorrichtung Signale aussendet.

Die Sendevorrichtung sendet Signale aus, die insbesondere für die Kommunikationsvorrichtungen bestimmt sind. Die Empfangsvorrichtung empfängt Signale von den Kommunikationsvorrichtungen. Dabei ist die Steuervorrichtung vorhanden, die der Sendevorrichtung einen Raumbereich vorgibt, in welchen Signale ausgesendet werden. Die Vorgabe des Raumbereichs für das Aussenden der Signale geschieht dabei in einer Ausgestaltung über das Auswählen einer Richtcharakteristik oder einer Überlagerung von Richtcharakteristiken, durch die die Signale in den ausgewählten Raumbereich ausgesendet werden. Ist beispielsweise eine Richtcharakteristik einer Sendeantenne mit einer Keulenform verbunden, so werden die Signale in diese Keule bzw. den zugehörigen Raumbereich ausgesendet. In einer Ausgestaltung ist vorgesehen, dass die Empfangsvorrichtung derartig ausgestaltet ist, Signale aus auswählbaren Empfangsbereichen zu empfangen.

Die folgenden Ausgestaltungen beziehen sich auf Signale, die von der Sendevorrichtung ausgesendet werden.

In einer Ausgestaltung ist vorgesehen, dass die Sendevorrichtung ein Aktivierungssignal ungerichtet aussendet. In dieser Ausgestaltung wird somit wenigstens ein Signal, nämlich das Aktivierungssignal, nicht nur in einen Raumbereich ausgesendet. Das Aktivierungssignal wird hier ungerichtet ausgesendet, so dass es möglichst viele Kommunikationsvorrichtungen erreichen kann. Dies baut darauf, dass für den Beginn noch nicht bekannt ist, ob und wo sich Kommunikationsvorrichtungen im Umfeld der Vorrichtung befinden. Die ungerichtete Aussendung ist dabei durch die zur Verfügung stehende Antennenvorrichtungen bedingt.

In einer alternativen Ausgestaltung ist vorgesehen, dass die Steuervorrichtung derartig ausgestaltet ist, einen Aktivierungsbereich vorzugeben, in welchen die Sendevorrichtung ein Aktivierungssignal aussendet. In dieser Ausgestaltung wird somit ein Raumbereich - der Aktivierungsbereich - vorgegeben, in den das Aktivierungssignal ausgesendet wird. Es wird also eine Vorzugsrichtung vorgegeben.

Das Aktivierungssignal ist dabei je nach Ausgestaltung ein Signal, um festzustellen, ob Kommunikationsvorrichtungen vorhanden sind, und um eine Kommunikation mit diesen vorzubereiten. Das Aktivierungssignal erlaubt es je nach Ausgestaltung der Kommunikationsvorrichtungen auch, die Kommunikationsvorrichtungen aus einem passiven Zustand in einen aktiven Zustand zu versetzen (siehe die Offenbarung der DE 10 2009 047 199 A1) oder den Kommunikationsvorrichtungen die Energie zuzuführen, die für eine Kommunikation erforderlich ist (im Sinne von RFID-Tags).

Bedingt in der vorangegangenen Ausgestaltung das Aktivierungssignal, das von der Vorrichtung bzw. speziell von der Sendevorrichtung ausgeht, das Auslösen der Kommunikation, so wird in einer der folgenden Ausgestaltungen gezeigt, dass der Wunsch nach Kommunikation auch von den Kommunikationsvorrichtungen ausgehen kann.

Um die Anzahl der Kommunikationsvorrichtungen, die auf ein Aktivierungssignal reagieren sollen, einzuschränken, ist in einer Ausgestaltung die Sendevorrichtung derartig ausgestaltet, ein Aktivierungssignal mit einer Aufweckkennung für mindestens eine zu aktivierende Kommunikationsvorrichtung auszusenden. Das Aktivierungssignal beinhaltet damit die Aussage, welche Kommunikationsvorrichtung bzw. welche Kommunikationsvorrichtungen davon betroffen sind bzw. aktiviert werden sollen.

In einer Ausgestaltung ist die Steuervorrichtung derartig ausgestaltet, der Empfangsvorrichtung unterschiedliche Empfangsbereiche für das Empfangen von Signalen vorzugeben. Passend zum Aussenden von Signalen in ausgewählte Raumbereiche werden in dieser Ausgestaltung auch die Signale nur aus ausgewählten Raumbereichen empfangen. Mit anderen Worten: In dieser Ausgestaltung hört die Empfangsvorrichtung nur auf Signale aus bestimmten Bereichen.

In einer Ausgestaltung werden die Empfangsbereiche so vorgegeben, dass es sich jeweils um Teilbereiche des Aktivierungsbereichs handelt.

In einer Ausgestaltung weist die Empfangsvorrichtung eine Antennenvorrichtung auf. Dabei weist die Antennenvorrichtung mehrere Richtcharakteristiken auf, die sich auf räumlich unterschiedliche Empfangsempfindlichkeiten beziehen. Zudem ist die Empfangsvorrichtung derartig ausgestaltet, die empfangenen Signale den Richtcharakteristiken zuzuordnen. Die Empfangsvorrichtung empfängt somit in Abhängigkeit von der jeweiligen Richtcharakteristik Signale aus bestimmten Raumbereichen. Daher kann über die Wahl der Richtcharakteristik auch vorgegeben werden, aus welchem Raumbereich Signale empfangen werden. Entsprechendes gilt in einer Ausgestaltung dabei auch für den Zusammenhang zwischen den Richtcharakteristiken und den Raumbereichen für das Senden von Signalen.

Die Zuordnung zwischen den empfangenen Signalen und den Richtcharakteristiken geschieht in einer Ausgestaltung dadurch, dass nur mit einer ausgesuchten Richtcharakteristik Signale empfangen werden. In einer alternativen Ausgestaltung werden mit mehreren Richtcharakteristiken Signale empfangen, die durch ein entsprechendes Netzwerk - z. B. durch eine Realisierung einer Butler-Matrix - in die den jeweiligen Richtcharakteristiken zugeordneten Signale aufgeteilt werden.

Die folgenden Ausgestaltungen beziehen sich auf die eigentliche Kommunikation zwischen der Vorrichtung und den Kommunikationsvorrichtungen, die insbesondere stattfinden, nachdem die Objekte und deren Position identifiziert worden sind.

In einer Ausgestaltung ist die Steuervorrichtung derartig ausgestaltet, einen Kommunikationsbereich vorzugeben, in welchen die Sendevorrichtung ein Kommunikationssignal aussendet. Durch die Einschränkung des Kommunikationsbereichs wird für das Aussenden der Signale weniger Energie benötigt und kann auch verhindert werden, dass nicht betroffene Kommunikationsvorrichtungen das Signal empfangen.

In einer weiteren Ausgestaltung geht von einer Kommunikationsvorrichtung ein Initiierungssignal aus, das bedeutet, dass die Kommunikationsvorrichtung in Kommunikation mit der Vorrichtung treten möchte. Für diesen Fall, dass die Empfangsvorrichtung von einer Kommunikationsvorrichtung ein Initiierungssignal empfängt, ist in einer damit verbundenen Ausgestaltung die Steuervorrichtung derartig ausgestaltet, einen Kommunikationsbereich vorzugeben. Der Kommunikationsbereich wird dabei in Abhängigkeit von einer Position der Kommunikationsvorrichtung vorgegeben, die das Initiierungssignal ausgesendet hatte. In den Kommunikationsbereich sendet dann die Sendevorrichtung ein Kommunikationssignal aus.

Die folgende Ausgestaltung bezieht sich darauf, dass über die Richtcharakteristiken eine gewisse Anzahl von Feldern oder Bereichen in Bezug auf die dort befindlichen Objekte bzw. Kommunikationsvorrichtungen abgetastet wird. Dabei sollen möglichst aus allen Bereichen alle Antwortsignale empfangen werden. Dies setzt beispielsweise darauf, dass von der Sendevorrichtung ein Aktivierungssignal ausgesendet wird, das die Kommunikationsvorrichtungen zu Antwortsignalen veranlasst. Um daher die Lokalisierung möglichst effektiv und energiesparend zu realisieren, sollte vorzugsweise ein Aktivierungssignal ausreichend sein, um die Positionen aller Kommunikationsvorrichtungen zu ermitteln. Daher ergibt sich das Ziel, möglichst schnell alle Bereiche zu durchlaufen.

Daher sieht es eine Ausgestaltung vor, dass die Empfangsvorrichtung derartig ausgestaltet ist, nur für einen vorgebbaren Zeitraum, der z. B. mit $T_{VD}$ bezeichnet ist, Signale zu empfangen. Die Zeitdauer wird dabei beispielsweise durch die Steuervorrichtung vorgegeben.

Der Zeitraum $T_{VD}$ wird dabei in einer Ausgestaltung in Abhängigkeit von einer Datenrate, die hier z. B. mit $1/T_b$ bezeichnet ist, vorgegeben, mit der die Kommunikationsvorrichtungen ihre Signale und insbesondere ihre Antwortsignale auf ein Aktivierungssignal aussenden. In einer Ausgestaltung ist der Zeitraum $T_{VD}$ proportional zum Kehrwert der Datenrate. Somit gilt bei einer Datenrate von $1/T_b$, dass der Zeitraum $T_{VD}$ proportional zu $T_b$ ist. Das bedeutet, dass bei einer höheren Datenrate der Zeitraum zum Empfangen von Signalen aus einem Empfangsbereich entsprechend kleiner wird. Dabei ist $T_b$ die Bitdauer.

Ergänzend oder alternativ sieht es eine Ausgestaltung vor, dass der Zeitraum $T_{VD}$ in Abhängigkeit von einer Anzahl der Empfangsbereiche, aus denen die Empfangsvorrichtung Signale empfängt, vorgegeben ist. In einer Ausgestaltung ist der Zeitraum $T_{VD}$ antiproportional zur Anzahl der Empfangsbereiche. Ist also beispielsweise die Anzahl der Empfangsbereiche gegeben über das Produkt M * N, so ist der Zeitraum $T_{VD}$ antiproportional zu M * N bzw. proportional zu 1/(M * N). Das bedeutet, dass mit wachsender Anzahl der Empfangsbereich die Zeit kleiner wird, während der die Empfangsvorrichtungen Signale aus den Bereichen empfängt. Um das Prozedere zu beschleunigen, ist es in einer Ausgestaltung vorgesehen, mehr als eine Empfangsvorrichtung zu verwenden.

In einer Ausgestaltung ergibt sich der Zeitraum $T_{VD}$ aus beiden vorgenannten Abhängigkeiten, so dass der Zeitraum $T_{VD}$ insbesondere proportional zu $T_b/(M * N)$ ist.

In einer Ausgestaltung ist der vorgebbare Zeitraum $T_{VD}$ für das Empfangen der Signale kleiner als die Bitdauer $T_b$. In einer weiteren Ausgestaltung ist der vorgebbare Zeitraum viel kleiner als die Bitdauer. In einer alternativen oder ergänzenden Ausgestaltung ist der vorgebbare Zeitraum $T_{VD}$ kleiner als die Bitdauer $T_b$ geteilt durch die Anzahl der Empfangsbereiche. Werden daher in einer Ausgestaltung n Felder abgefragt, so ist der Zeitraum kleiner oder vorzugsweise deutlich kleiner als die Bitdauer geteilt durch die Anzahl n der Felder. Das bedeutet: $T_{VD} < T_b/n$ bzw. $T_{VD} << T_b/n$. Bei zwei Feldern ist also der vorgebbare Zeitraum kleiner als die Hälfte der Bitdauer. Dies erlaubt die schnelle Erfassung von mehreren Feldern innerhalb eines Datenbits der Dauer $T_b$. Damit ergibt sich auch der Eindruck einer gleichzeitigen Kommunikation zwischen mehreren Objekten und der zentralen Funkeinheit.

In einer Ausgestaltung ist die Empfangsvorrichtung derartig ausgestaltet, aus mindestens einem empfangenen Signal eine Identitätskennung betreffend der Kommunikationsvorrichtung zu bestimmen, von der das empfangene Signal stammt. In dieser Ausgestaltung wird von den Kommunikationsvorrichtungen im Antwortsignal jeweils eine Information übertragen, die eine Ermittlung der Identität der Kommunikationsvorrichtung bzw. des zugeordneten Objekts erlaubt.

Die folgenden Ausgestaltungen beziehen sich auf die Sendevorrichtung oder die Empfangsvorrichtung, die je nach Ausgestaltung einen ähnlichen Aufbau oder unterschiedliche Ausgestaltungen haben.

So sieht es eine Ausgestaltung vor, dass die Sendevorrichtung mehrere auswählbare unterschiedliche Richtcharakteristiken aufweist. Dabei beziehen sich die Richtcharakteristiken jeweils auf eine Menge an räumlich unterschiedlichen Sendeeigenschaften. Je Richtcharakteristik bildet sich somit jeweils ein räumlich unterschiedlich verteiltes Sendefeld aus. Oder mit anderen Worten: Die Signale werden jeweils unterschiedlich in den Raum hinein ausgestrahlt.

Eine alternative oder ergänzende Ausgestaltung beinhaltet, dass die Empfangsvorrichtung mehrere auswählbare unterschiedliche Richtcharakteristiken aufweist. Dabei beziehen sich die Richtcharakteristiken jeweils auf eine Menge an räumlich unterschiedlichen Empfangsempfindlichkeiten. In dieser Ausgestaltung empfängt die Empfangsvorrichtung Signale unterschiedlich stark aus unterschiedlichen Raumbereichen.

In einer weiteren Ausgestaltung weisen oder weist die Sendevorrichtung und/oder die Empfangsvorrichtung eine Antennenvorrichtung auf. Dabei ist die Antennenvorrichtung als Mehrkeulenantenne ausgestaltet. Eine Mehrkeulenantenne oder Multibeam-Antenne verfügt über mehrere Richtcharakteristiken, die jeweils durch eine Keule gekennzeichnet sind. Die Keulen sind dabei jeweils in unterschiedliche Raumrichtungen ausgerichtet. Dies ist damit auch die Hauptrichtung, in die Signale gesendet und aus der Signale empfangen werden. Damit ist auch jede Richtcharakteristik einem Raumbereich zugeordnet. In einer Ausgestaltung verwenden die Sendevorrichtung und die Empfangsvorrichtung die gleiche Antennenvorrichtung.

In einer Ausgestaltung sind die Sendevorrichtung und die Empfangsvorrichtung als eine Komponente ausgeführt. Beide Vorrichtungen sind daher in dieser Ausgestaltung im Wesentlichen als eine Einheit ausgestaltet, die daher auch als zentrale Funkeinheit bezeichnet werden kann.

In einer alternativen Ausgestaltung sind die Sendevorrichtung und die Empfangsvorrichtung separate Einheiten, die sich auch an unterschiedlichen Positionen befinden.

Die Erfindung löst die Aufgabe weiterhin durch eine Kommunikationsvorrichtung. Die Kommunikationsvorrichtung weist eine Aussendevorrichtung und eine Detektionsvorrichtung auf. Die Aussendevorrichtung ist derartig ausgestaltet, Signale auszusenden. Die Detektionsvorrichtung ist derartig ausgestaltet, Signale zu empfangen. Zudem ist die Aussendevorrichtung derartig ausgestaltet, die Signale derartig auszusenden, dass die Signale die Bestimmung mindestens einer Identitätskennung betreffend der Kommunikationsvorrichtung erlauben. Die Kommunikationsvorrichtung sendet somit Signale aus, die eine Identifizierung der Kommunikationsvorrichtung bzw. eines damit verbundenen Objekts erlauben.

In Bezug auf die Kommunikationsvorrichtung gelten dabei teilweise auch die obigen Ausführungen oder Erläuterungen hinsichtlich der Vorrichtung, die sich auf die Kommunikationsvorrichtung beziehen. Umgekehrt gilt dies auch.

Bei der Kommunikationsvorrichtung handelt es sich in einer Ausgestaltung um einen RFID-Tag. In einer alternativen oder ergänzenden Ausgestaltung ist die Kommunikationsvorrichtung gemäß der Offenbarung der Offenlegungsschrift DE 10 2009 047 199 A1 ausgestaltet.

Die Aussendevorrichtung ist in einer Ausgestaltung derartig ausgestaltet, ein Initiierungssignal auszusenden, um eine Kommunikation mit einer Vorrichtung zur Kommunikation zu initiieren. Die Kommunikationsvorrichtung ist in dieser Ausgestaltung nicht nur rein passiv und reagiert auf ein sie erreichendes Signal, sondern die Kommunikationsvorrichtung löst eine Kommunikation aus, indem es ein Initiierungssignal aussendet.

In einer Ausgestaltung ist die Kommunikationsvorrichtung derartig ausgestaltet, nach dem Empfang eines Aktivierungssignals mindestens ein Antwortsignal auszusenden.

In einer weiteren Ausgestaltung wechselt die Kommunikationsvorrichtung nach dem Empfang eines Aktivierungssignals von einem passiven Zustand in einen aktiven Zustand. Die Kommunikationsvorrichtung wird somit durch ein empfangenes Signal aktiviert.

In einer Ausgestaltung empfängt die Kommunikationsvorrichtung durch das Aktivierungssignal Energie, um ein Antwortsignal zu senden oder um z. B. mit einem Sensor eine Messung durchzuführen.

In einer Ausgestaltung weist die Kommunikationsvorrichtung mindestens einen Sensor auf. Dabei ist die Aussendevorrichtung derartig ausgestaltet, ein Signal mit einem Messwert des Sensors auszusenden. Der Sensor ermittelt beispielsweise Temperatur, Druck, Leitfähigkeit, pH-Wert, Durchfluss oder Füllstand. Der Messwert wird dann von der Aussendevorrichtung ausgesendet.

Schließlich löst die Erfindung die Aufgabe auch durch ein Verfahren zur Kommunikation zwischen einer Vorrichtung zur Kommunikation und mindestens einer Kommunikationsvorrichtung. Das Verfahren umfasst zumindest die folgenden Schritte:

Es wird ein Aktivierungssignal von der Vorrichtung an die Kommunikationsvorrichtung ausgesendet. Alternativ oder ergänzend wird ein Initiierungssignal von der Kommunikationsvorrichtung an die Vorrichtung ausgesendet.

Zudem und in einer Ausgestaltung insbesondere anschließend wird in einen Kommunikationsbereich ein Kommunikationssignal von der Vorrichtung an die Kommunikationsvorrichtung ausgesendet.

Dabei gelten die obigen Ausführungen und Ausgestaltungen zu der Vorrichtung bzw. der Kommunikationsvorrichtung entsprechend auch für das erfindungsgemäße Verfahren. Umgekehrt lassen sich auch Verfahrensschritte durch Ausgestaltungen der Vorrichtung bzw. der Kommunikationsvorrichtung realisieren, so dass auch die Ausführungen bezüglich des Verfahrens für die Vorrichtung sowie die Kommunikationsvorrichtung gelten.

Eine Ausgestaltung des Verfahrens weist die folgenden Schritte auf:

Von der Vorrichtung wird ein Aktivierungssignal in einen Aktivierungsbereich ausgesendet. Der Aktivierungsbereich ist dabei in einer Ausgestaltung durch die ungerichtete Ausstrahlung des Aktivierungssignals und daher durch die Ausgestaltung der für das Aussenden verwendeten Antennenvorrichtung und deren Abstrahleigenschaften gegeben. In einer anderen Ausgestaltung ergibt sich der Aktivierungsbereich durch wenigstens eine Richtcharakteristik der für das Aussenden verwendeten Antennenvorrichtung, mit der eine bestimmte räumliche Verteilung der ausgesendeten Signale einhergeht.

Nach dem Empfang des Aktivierungssignals durch wenigstens eine Kommunikationsvorrichtung wird von dort wenigstens ein Antwortsignal gesendet.

Die Antwortsignale werden von der Vorrichtung empfangen. Der Empfang der Antwortsignale beinhaltet, dass durch den Empfang auch eine Aussage über die Position oder zumindest die Richtung der aussendenden Kommunikationsvorrichtung relativ zur verwendeten Antennenvorrichtung möglich ist. Dies geschieht in einer Ausgestaltung durch die Verwendung von Empfangsbereichen, die jeweils Richtcharakteristiken der für den Empfang verwendeten Antennenvorrichtung zugeordnet sind. Daher werden in einer Ausgestaltung unterschiedliche Richtcharakteristiken für den Empfang verwendet.

Anschließend wird ein Kommunikationsbereich ausgewählt, indem insbesondere die zugehörige Richtcharakteristik verwendet wird. In diesen Kommunikationsbereich wird dann von der Vorrichtung an die sich in dem Kommunikationsbereich befindende mindestens eine Kommunikationsvorrichtung ein Kommunikationssignal gesendet. Anschließend können aus dem Kommunikationsbereich auch weitere Signale empfangen werden.

In einer weiteren Ausgestaltung sendet eine Kommunikationsvorrichtung ein Initiierungssignal an die Vorrichtung aus. Daran schließt sich in einer Variante die vorgenannte Ausgestaltung an. In einer alternativen Variante erlaubt das Initiierungssignal bzw. dessen Empfang bereits die Erkenntnis über den Ort der aussendenden Kommunikationsvorrichtung, so dass im nächsten Schritt sogleich in den Kommunikationsbereich das Kommunikationssignal gesendet werden kann.

Insgesamt ergibt sich somit auch ein Kommunikationssystem zwischen der Vorrichtung und der Kommunikationsvorrichtung, die teilweise nach den obigen Ausgestaltungen ausgeführt sind.

Im Einzelnen gibt es eine Vielzahl von Möglichkeiten, die erfindungsgemäße Vorrichtung zur Kommunikation, die Kommunikationsvorrichtung und das erfindungsgemäße Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1     einen schematischen Aufbau einer erfindungsgemäßen Vorrichtung in der Anwendung,

Fig. 2     eine schematische Skizze einer alternativen Vorrichtung in der Anwendung,

Fig. 3     eine schematische Skizze des Schritts 1 der erfindungsgemäßen Kommunikation mit einer weiteren Ausgestaltung der Vorrichtung,

Fig. 4       eine schematische Skizze des Schritts 2 der Anordnung der Fig. 3,

Fig. 5       eine schematische Skizze des Schritts 3 der Anordnung der Fig. 3,

Fig. 6       eine schematische Darstellung eines zeitlichen Ablaufs des Durchlaufens von Feldern,

Fig. 7       eine schematische Darstellung der Komponenten einer Vorrichtung in Art eines Blockschaltbilds,

Fig. 8       eine schematische Darstellung einer Kommunikationsvorrichtung,

Fig. 9       eine schematische Darstellung eines ersten Anwendungsszenarios,

Fig. 10      eine schematische Darstellung eines zweiten Anwendungsszenarios und

Fig. 11      eine schematische Darstellung eines dritten Anwendungsszenarios.

Die in Verbindung mit den Abbildungen erläuterte Vorrichtung, die Kommunikationsvorrichtung und das Verfahren erlauben eine schnelle parallele Kommunikation zwischen einer zentralen Funkeinheit (die - wie im Folgenden ausgeführt wird - in einer Ausgestaltung eine Sendevorrichtung und eine Empfangsvorrichtung aufweist) und einzelnen Kommunikationsvorrichtungen bzw. damit verbundenen Objekten im Raum. Zusätzlich sind je nach Ausgestaltung auch eine Identifikation sowie eine Lokalisierung der Kommunikationsvorrichtungen bzw. Objekte möglich. Eine Synchronisation vorher oder während der Kommunikation lässt sich insbesondere vermeiden.

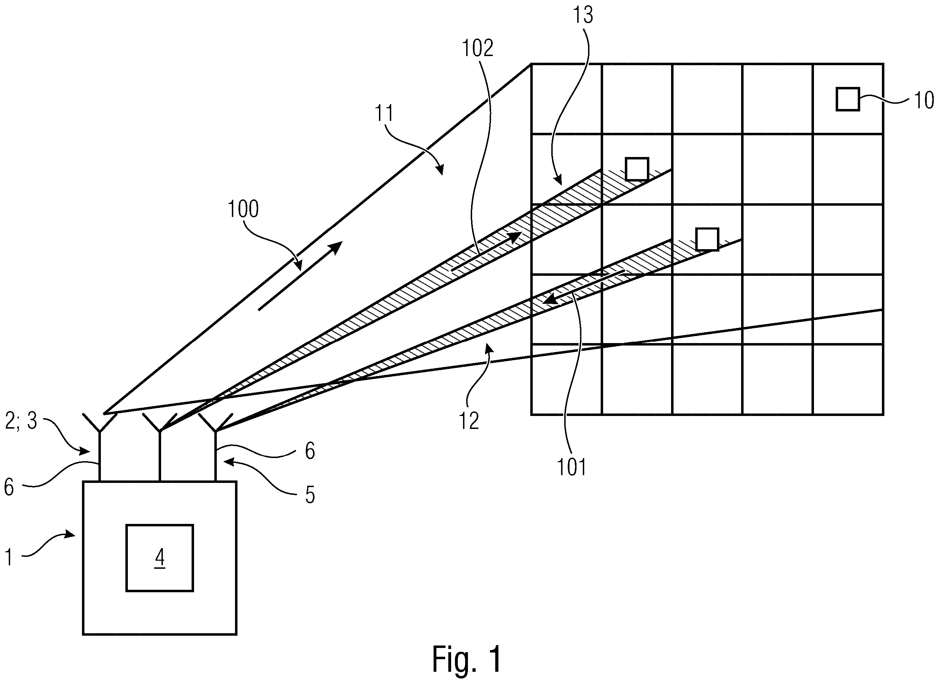

Die Ausgestaltung der Vorrichtung 1 in Fig. 1 umfasst eine Sendevorrichtung (TX) 2 und eine Empfangsvorrichtung (RX) 3 sowie eine Antennenvorrichtung 5, die über mehrere (hier drei) Antennenelemente 6 (z. B. Teile einer Patchantenne oder Dipolantennen, Alternativen sind z. B. Monopolantennen, monopol-artige Antennen, Chip-Antennen oder Schleifenantennen) verfügt. Die Antennenvorrichtung 5 ist dabei als Mehrkeulenantenne bzw. Multibeam-Antenne ausgestaltet. Dabei sind die unterschiedlichen keulenförmigen Richtcharakteristiken schaltbar, so dass sich für das Senden bzw. Empfangen von Signalen über die Antennenvorrichtung 5 unterschiedliche Raumbereiche vorgeben lassen. Die Richtcharakteristiken sind dabei mit räumlich unterschiedlichen Empfangsempfindlichkeiten bzw. Sendeeigenschaften verbunden. Das Auswählen der Richtcharakteristiken bzw. der Raumbereiche geschieht über die Steuervorrichtung 4, z. B. in Form eines Speisenetzwerks.

Die Vorrichtung 1 (eine alternative Bezeichnung für die gezeigte Ausgestaltung ist zentrale Funkeinheit) weist eine Sendevorrichtung 2 und eine Empfangsvorrichtung 3 auf, die hier in einer Sende-/Empfangsvorrichtung zusammenfallen und gemeinsam die Antennenvorrichtung 5 mit den drei Antennenelementen 6 verwenden. Die Steuerung der Sendevorrichtung 2 und der Empfangsvorrichtung 3 bzw. der Sende- und Empfangsfunktion der Sende-/Empfangsvorrichtung 2, 3 erfolgt durch die Steuervorrichtung 4. Die Steuerung bezieht sich insbesondere auf die Raumbereiche, in die Signale gesendet bzw. aus denen Signale empfangen werden.

In dem Zusammenhang mit der Vorgabe einzelner Richtcharakteristiken und damit einzelner Raumbereiche sei erläutert, was unter ungerichteten Ausstrahlung bzw. ungerichtetem Empfang zu verstehen ist. In diesem Fall werden - je nach Ausgestaltung der Sendevorrichtung 2 bzw. der Empfangsvorrichtung 3 bzw. der zur Verfügung stehenden Antennenvorrichtung 5 - Signale homogen oder unter Verwendung einer Vielzahl von Richtcharakteristiken gesendet bzw. empfangen. Es gibt somit keine bevorzugte Verteilung. Es werden somit in einer Ausgestaltung für den ungerichteten Empfang bzw. das ungerichtete Senden alle Antennenelemente 6 bzw. alle Richtcharakteristiken verwendet, über die die Antennenvorrichtung 5 verfügt.

In dem dargestellten Beispiel umfasst die Antennenvorrichtung 5 drei Antennenelemente 6, über die sich unterschiedliche Richtcharakteristiken erzeugen lassen. Ein Antennenelement 6 hat dabei einen großen Aktivierungsbereich 11, in den ein Aktivierungssignal 100 ausgesendet wird. Das Aktivierungssignal 100 soll die Kommunikationsvorrichtungen 10 innerhalb des Aktivierungsbereichs 11 aktivieren oder aufwecken und soll ihnen z. B. die für die Kommunikation in Form eines Antwortsignals 101 erforderliche Energie übermitteln.

Die Kommunikationsvorrichtungen 10 befinden sich in dem dargestellten Ausführungsbeispiel in einer Wand, die gedanklich in einzelne Felder unterteilt ist. Die Unterteilung in Felder ergibt sich insbesondere dadurch, dass die Steuervorrichtung 4 der Empfangsvorrichtung 3 unterschiedliche Empfangsbereiche 12 vorgibt, aus denen die Empfangsvorrichtung 3 die Antwortsignale 101 der Kommunikationsvorrichtungen 10 empfängt. Die Empfangsvorrichtung 3 tastet somit die Felder des Aktivierungsbereichs 11 ab. Dies kann z. B. zeilen- und spaltenweise erfolgen oder zufällig. Die Empfangsbereiche 12 sind dabei in der gezeigten Ausgestaltung Teilbereiche des Aktivierungsbereichs 11, in den das Aktivierungssignal 100 gesendet worden ist. Die Vorgabe der Empfangsbereiche 12 geschieht hier durch das Schalten der unterschiedlichen Richtcharakteristiken der Antennenvorrichtung 5.

Beim Aktivieren der Kommunikationsvorrichtungen 10 wird somit eine Richtcharakteristik verwendet oder wird das Aktivierungssignal 100 ungerichtet ausgesendet, um einen großen Aktivierungsbereich 11 zu erreichen. Die Antwortsignale 101 der Kommunikationsvorrichtungen 10 werden jedoch aus kleineren Empfangsbereiche 12 empfangen, um damit auch die Information über den Ort der Kommunikationsvorrichtungen 10 zu erhalten.

Aus den empfangenen Signale wird zum einen eine Information über die Kommunikationsvorrichtung 10 ermittelt, z. B. ein Identifikationskennzeichen. Zudem wird aus dem Signal in Verbindung mit der für den Empfang verwendeten Richtcharakteristik die Lage der jeweiligen Kommunikationsvorrichtung 10 ermittelt.

Daher gewinnt die Vorrichtung 1 aus den empfangenen Signalen - hier sind dies die Antwortsignale 101 - Daten über die Position und Identität der vorhandenen Kommunikationsvorrichtungen 10, so dass auch ggf. mit den Kommunikationsvorrichtungen 10 verbundene Objekte identifizierbar sind.

Nach dem Identifizieren und Lokalisieren der Kommunikationsvorrichtungen 10 findet eine gezielte Kommunikation mit einzelnen Kommunikationsvorrichtungen 10 statt. Hierfür wird ein Kommunikationsbereich 13 vorgegeben, so dass die auszusendenden Kommunikationssignale 102 nur in den ausgewählten Kommunikationsbereich 13 gesendet werden.

Bei den Bereichen 11, 12 und 13 deuten jeweils Pfeile an, in welche Richtungen sich die jeweils zugeordneten Signale bewegen. Dabei dient der Kommunikationsbereich 13 ggf. nach dem Versenden eines Kommunikationssignals 102 der Vorrichtung 1 auch dem Empfangen von weiteren Signalen, die von Kommunikationsvorrichtungen 10 stammen, die in den Kommunikationsbereich 13 hinein ihre Signale aussenden.

Die Vorrichtung 1 erlaubt insgesamt die Kommunikation mit z. B. beweglichen Objekten oder Kommunikationsvorrichtungen 10, die beispielsweise eine autonome Stromversorgung in Form von Batterien oder Energy-Harvesting-Generatoren aufweisen.

Die Kommunikationsvorrichtungen 10 verfügen über eine Funkanbindung, die in einer Ausgestaltung aus einem vorzugsweise stromsparenden Funkempfänger, einem Funksender sowie einer Rechen- und Steuereinheit besteht. Optional können auch Sensoren (z. B. Fotodiode oder Mikrofon) oder Aktoren (z. B. Motor oder akustischer Signalgeber) vorhanden sein.

Die Kommunikationsvorrichtungen 10 sind zum Beobachtungszeitpunkt im Raum verteilt und zunächst nicht bewegt. Der einfacheren Darstellung und Erläuterung halber sind die Kommunikationsvorrichtungen 10 beispielsweise in einer Ebene oder in zwei versetzten, nebeneinander liegenden Halb-Ebenen (z. B. Wandregalen) angeordnet und können von der zentralen Funkeinheit aus - vergleichbar mit einem gebündelten Lichtstrahl von der Antenne der zentralen Funkeinheit - mit einem gebündelten Funkstrahl (im Folgenden auch "Beam" genannt) anvisiert werden.

Der Sonderfall der Verdeckung und der fehlenden Sichtverbindung wird ebenfalls in dieser Erfindungsmeldung abgedeckt, insbesondere durch die Eigenschaft von Funkwellen Materie zu durchdringen.

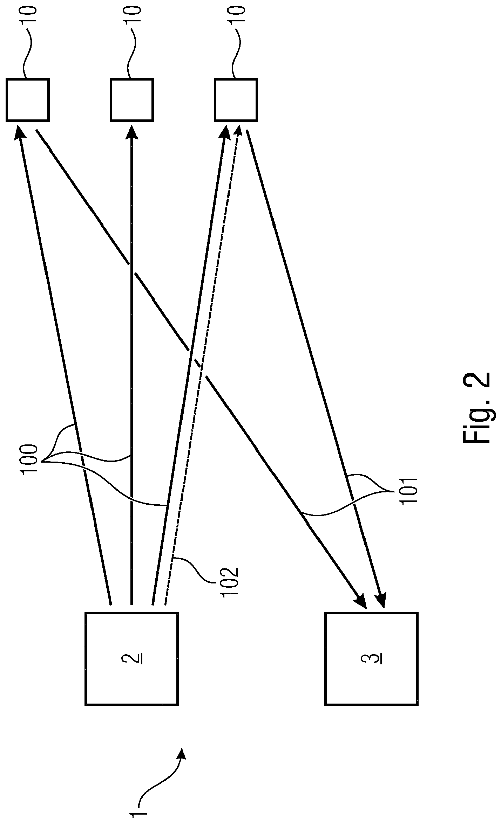

In der Fig. 2 ist der Weg von einigen Signalen schematisch dargestellt. Dabei bilden die Vorrichtung 1 zur Kommunikation und die Kommunikationsvorrichtungen 10 zusammen ein Kommunikationssystem oder eine Kommunikationsanordnung.

In der dargestellten Ausgestaltung der Vorrichtung 1 sind die Sendevorrichtung 2 und die Empfangsvorrichtung 3 separate Komponenten, die hier auch unterschiedliche - für die Übersichtlichkeit nicht dargestellte - Antennenvorrichtungen benutzen.

Von der Sendevorrichtung 2 geht ein Aktivierungssignal 100 an die drei vorhandenen Kommunikationsvorrichtungen 10 aus. Das Aktivierungssignal 100 trägt in der gezeigten Ausgestaltung eine Kennung, die angibt, welche Kommunikationsvorrichtungen 10 vollständig aktiviert werden und Antwortsignale senden sollen. Es wird also ein sogenannter selektiver Aufweckvorgang vorgenommen. Je nach Anwendungsfall werden Objekte individuell über ihre jeweilige ID-Kennung (z. B. 16-Bit-Folge) adressiert und aufgeweckt. Auch ein Aufwecken von Objektgruppen (z. B. alle Objekte des Typs 12 mit der Gruppen-ID "12") kann als selektiver Aufweckvorgang erfolgen. Dies hilft, um die Stromaufnahme innerhalb der Objekte weiter niedrig zu halten, weil unnötige Sendevorgänge vermieden werden. Ferner ist das selektive Aufwecken hilfreich, wenn eine sehr große Anzahl von Objekten erreichbar ist und tatsächlich nur eine Untergruppe für die Abfrage interessant ist. Die nicht adressierten Kommunikationsvorrichtung 10 empfangen daher nur das Aktivierungssignal 100 und lesen die Information aus, dass sie nicht weiter reagieren müssen.

In einer weiteren alternativen oder ergänzenden Ausgestaltung sendet die Sendevorrichtung 2 das Aktivierungssignal 100 nicht wie hier dargestellt ungerichtet aus, sondern hinein in einen schmalen ausgewählten Aktivierungsbereich 11. Durch diese Beschränkung des Bereichs, in den das Aktivierungssignal 100 gelangt, wird daher alternativ oder ergänzend eine Auswahl der Kommunikationsvorrichtungen 10 vorgenommen, mit denen eine Kommunikation stattfinden soll.

Aktiviert wurden in dem gezeigten Fall durch die Aussendung der Kennung nur die obere und die untere Kommunikationsvorrichtung 10, die jeweils ein Antwortsignal 101 aussenden. Die Antwortsignale 101 werden von der Empfangsvorrichtung 3 empfangen, indem die Richtcharakteristiken der Empfangsvorrichtung 3 die Kommunikationsvorrichtungen 10 hier von oben nach unten abfahren oder abscannen.

Aus den zwei Antwortsignalen 101 in Verbindung mit den für den Empfang verwendeten Richtcharakteristiken wird jeweils die Position der einzelnen Kommunikationsvorrichtungen 10 ermittelt. Da - wie beispielsweise bei RFID-Transpondern üblich - die Antwortsignale auch Kennzeichnungsdaten der Kommunikationsvorrichtungen 10 umfassen, erlauben die Antwortsignale 101 die Identifikation der einzelnen Kommunikationsvorrichtungen 10.

Nach dem Abscannen der - hier drei - Felder ist daher in der Vorrichtung 1 der Zusammenhang zwischen den antwortenden Kommunikationsvorrichtungen 10 und ihren Positionen bzw. den erforderlichen Richtcharakteristiken gegeben, mit denen jeweils eine Kommunikationsvorrichtung 10 angesprochen werden kann.

Daher ist anschließend eine gezielte Kommunikation mit einzelnen Kommunikationsvorrichtungen 10 möglich. Hierfür wird der Kommunikationsbereich vorgegeben, in den das Kommunikationssignal 102 ausgesendet wird. Dabei ergibt sich der Kommunikationsbereich dadurch, dass eine entsprechende Richtcharakteristik der Sendevorrichtung 2 für das Senden des Kommunikationssignals 102 verwendet wird.

Hier wird beispielhaft das Kommunikationssignal 102 an die untere Kommunikationsvorrichtung 10 ausgestrahlt (verdeutlicht durch den gestrichelten Pfeil).

Insgesamt lässt sich also bezogen auf Ausführungsbeispiele die Kommunikation, Identifikation und Lokalisierung als mehrstufiges Verfahren erläutern:

Schritt 1:

In einer ersten Ausgestaltung erfolgt eine Aktivierung von Kommunikationsvorrichtungen durch gerichtet oder ungerichtet ausgesendete Aktivierungssignale (oder auch bezeichnet als Anregungssignale). Diese Aktivierungssignale gehen von einer Sendevorrichtung aus, die in einer Ausgestaltung zu einer zentralen Funkeinheit gehört (siehe Fig. 1) und in einer alternativen Ausgestaltung eine separate Komponente ist (siehe Fig. 2). Das Anregungssignal stellt somit eine Aufforderung an die Kommunikationsvorrichtungen dar, ein Signal zu senden. Dabei wird ggf. noch eine Kennung übermittelt, welche der Kommunikationsvorrichtungen antworten sollen.

In einer alternativen zweiten Ausgestaltung des ersten Schritts wird von mindestens einer Kommunikationsvorrichtung ein Initiierungssignal ausgesendet, dass diese Kommunikationsvorrichtung eine Kommunikation aufnehmen möchte. Um auch dies zu erkennen, werden von einer Empfangsvorrichtung - die z. B. zu der genannten zentralen Funkeinheit gehört - in wenigstens einer Hör- oder Lauschphase Signale ungerichtet oder entsprechend mit einer Mehrzahl von zur Verfügung stehenden Richtcharakteristiken empfangen. Damit ist die Empfangsvorrichtung also aktiv für Signale aus vielen unterschiedlichen Bereichen.

Damit bedeutet der erste Schritt für eine Sendevorrichtung bzw. eine Empfangsvorrichtung der erfindungsgemäßen Vorrichtung zur Kommunikation mit den beliebig im Raum verteilten Kommunikationsvorrichtungen, dass in einen großen und nicht unbedingt näher spezifizierten Raumbereich Signale gesendet bzw. daraus empfangen werden.

Schritt 2:

Nach dem Aktivierungssignal bei der ersten Ausgestaltung im Schritt 1 antworten die Kommunikationsvorrichtungen (die hier teilweise auch als Objekte bezeichnet werden) mit einem Antwortsignal. Dabei umfasst das Antwortsignal in einer Ausgestaltung objektspezifische Daten, bei denen es sich beispielsweise um Identifikationsdaten oder Messdaten usw. handelt. Die Antwortsignale werden dabei gebündelt empfangen, indem der Raum um die jeweils verwendete Antennenvorrichtung selektiv durch die zur Verfügung stehenden Richtcharakteristiken abgetastet wird. Dies geschieht sequentiell oder parallel, indem z. B. durch ein passendes Speisenetzwerk die empfangenen Signale den einzelnen Richtcharakteristiken zugeordnet werden. In einer Ausgestaltung senden die Kommunikationsvorrichtungen Antwortsignale, die eine Präambel und eigentlich zu übertragende Daten umfassen. Die Präambel umfasst dabei in einer Ausgestaltung eine Kennung der Kommunikationsvorrichtung. Die Daten beinhalten in einer Ausgestaltung von einem Sensor erfasste Messdaten.

Die Antwortsignale werden dabei im Wesentlichen verzögerungsfrei bzw. parallel empfangen: In einer Ausgestaltung geschieht dies durch die Mehrzahl an unterschiedlichen Richtcharakteristiken und die Aufspaltung durch ein Speisenetzwerk (z. B. in Form einer Butler-Matrix), das mit der Antennenvorrichtung verbunden ist. In einer anderen Ausgestaltung werden die unterschiedlichen Richtcharakteristiken so schnell geschaltet und werden daher die jeweils unterschiedlichen Empfangsbereiche so schnell geschaltet, dass alle Empfangsbereiche innerhalb der Zeit durchlaufen werden, in der die Kommunikationsvorrichtungen ihre Antwortsignale aussenden.

Bei der zweiten - im Schritt 1 angesprochenen - Ausgestaltung mit einer Kommunikationsvorrichtung, von der ein Initiierungssignal ausgeht, erlaubt es die Empfangsvorrichtung in einer Variante, dass der Schritt 2 übersprungen wird, weil z. B. über die Aufspaltung der empfangenen Signale in die Richtcharakteristiken bereits durch das Initiierungssignal bekannt ist, wo sich die Kommunikationsvorrichtung befindet. Ist dies aufgrund dieses Signals noch nicht möglich, so wird in einer anderen Variante der Raum durch die einzelnen Richtcharakteristiken abgetastet. Alternativ löst das Initiierungssignal den Schritt 1 aus.

Ein Ablauf bezüglich der Initiierung durch eine Kommunikationsvorrichtung ist z. B. wie folgt:

Von einem mit der Kommunikationsvorrichtung verbundenen Sensor wird zum Zeitpunkt t0 ein Ereignis festgestellt.

Daraufhin sendet die Kommunikationsvorrichtung des entsprechenden Objekts das Initiierungssignal aus. Diese Funkmeldung umfasst beispielsweise eine ID, den Sensorwert und eine Aussage über den Typ des Ereignisses oder einen Zeitstempel des Ereignisses.

Die Empfangsvorrichtung der Vorrichtung zur Kommunikation ist auf den ungerichteten Empfang von Signalen eingestellt und empfängt daher das Initiierungssignal, indem es die Meldung quasi sofort entgegennimmt.

Verfügt die Empfangsvorrichtung über die Möglichkeit der Auftrennung der empfangenen Signale nach den Richtcharakteristiken, so liegt ihr mit dem Empfang des Initiierungssignals zugleich auch die Winkelposition bzw. die Matrixposition der Kommunikationsvorrichtung innerhalb der den Richtcharakteristiken zugeordneten Felder vor.

In einer alternativen Ausgestaltung schaltet die Empfangsvorrichtung die einzelnen Richtcharakteristiken durch, wobei hier der Wechsel zwischen den Feldern beschleunigt werden kann, da nur eine Kommunikationsvorrichtung sendet.

Insgesamt liegen nach einer Präambel ($31 * T_B$) und der Dauer des Datenpakets (16-Bit-ID und Daten, insgesamt zwischen 64 und 128 Bit) im Datenspeicher der Empfängervorrichtung (bzw. der Empfänger- oder RX-Komponente der zentralen Funkeinheit) die Informationen des Sensorereignisses vor. Die Informationen beziehen sich dabei auf die oben genannten Inhalte des Initiierungssignals.

Schritt 3:

In diesem Schritt 3 findet die eigentliche Kommunikation statt, wobei von der Sendevorrichtung bzw. der zentralen Funkeinheit Funktelegramme als Kommunikationssignale gezielt über entsprechende Richtcharakteristiken an die einzelnen Objekte oder Felder gesendet werden. Die gerichtete Kommunikation reduziert mögliche Störungen und erlaubt eine höhere Datenrate bei reduzierter Sendeleistung.

Dabei wird in einer Ausgestaltung nach dem Aussenden des Kommunikationssignals aus dem Kommunikationsbereich auch mindestens ein Signal empfangen. Die Vorrichtung wählt daher einen Kommunikationsbereich aus, in den hinein die Sendevorrichtung das Kommunikationssignal sendet und aus dem die Empfangsvorrichtung mindestens ein weiteres Signal empfängt, das vorzugsweise ein Antwortsignal auf das Kommunikationssignal ist. In dieser Ausgestaltung ereignet sich daher im Kommunikationsbereich eine bidirektionale Signalübertragung.

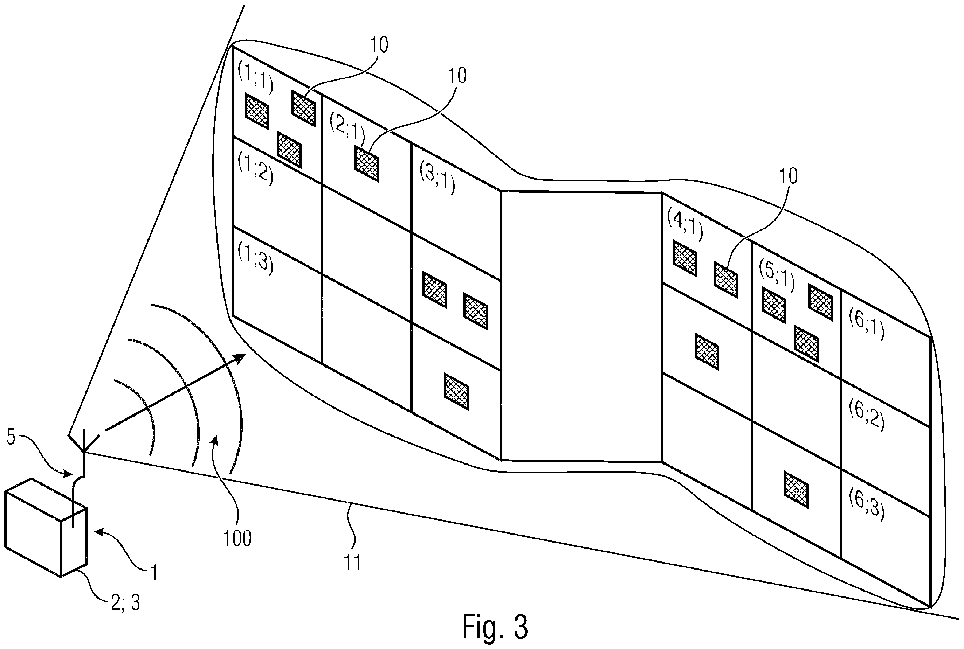

Die Schritte 1 bis 3 werden im Folgenden in Verbindung mit den Abbildungen Fig. 3 bis Fig. 5 noch einmal erläutert. Dargestellt ist dabei jeweils die Vorrichtung 1 mit einer als eine Komponente ausgestalteten Sendevorrichtung 2 und Empfangsvorrichtung 3 sowie einer Antennenvorrichtung 5. Die Vorrichtung 1 sei hier teilweise als zentrale Funkeinheit bezeichnet.

In dem Raum vor der zentralen Funkeinheit 1 befinden sich mehrere Kommunikationsvorrichtungen 10, die jeweils für ein Objekt stehen. Die Objekte 10 sind hier ortsfest und ändern daher nicht ihre Position. Die Richtcharakteristiken der Antennenvorrichtung 5 erlauben in dem dargestellten Beispiel die Aufteilung des Raumes in mehrere Felder, die mit Koordinaten (i; j) bezeichnet werden, die sich aus der i-ten Spalte und der j-ten Zeile ergeben.

Die zu diskutierenden Raumbereiche für das Senden bzw. Empfangen der Signale sind jeweils eingezeichnet, wobei Pfeile die Richtung der Signale kennzeichnen.

Im Schritt 1, der in Fig. 3 dargestellt ist, wird ein Anregungssignal 100, das als Aufwecktelegramm bezeichnet werden kann, an alle Objekte 10 gleichzeitig im Sichtbereich der (un)gebündelten Antennenvorrichtung 5 von der zentralen Funkeinheit 1 gesendet. Das Signal ist in einer Ausgestaltung eine Aktiviersequenz mit einer Dauer von z. B. 30 ms. Die Objekte 10 sind dabei entsprechend ausgestaltet, das Anregungssignal 100 als vereinbarte Aktiviersequenz zu empfangen und zu erkennen und daraufhin Antwortsignale für den Schritt 2 vorzubereiten. Die Objekte 10 sind nun "geweckt".

Die zentrale Funkeinheit 1 stellt nach dem Aussenden des Anregungssignals 100 die Mehrkeulenantenne als Beispiel für die Antennenvorrichtung 5 auf das erste der m * n Felder der Objektebene ein und geht auf Empfang. War also zunächst die Sendevorrichtung 2 aktiv, so arbeitet nun die Empfangsvorrichtung 3 der zentralen Funkeinheit 1.

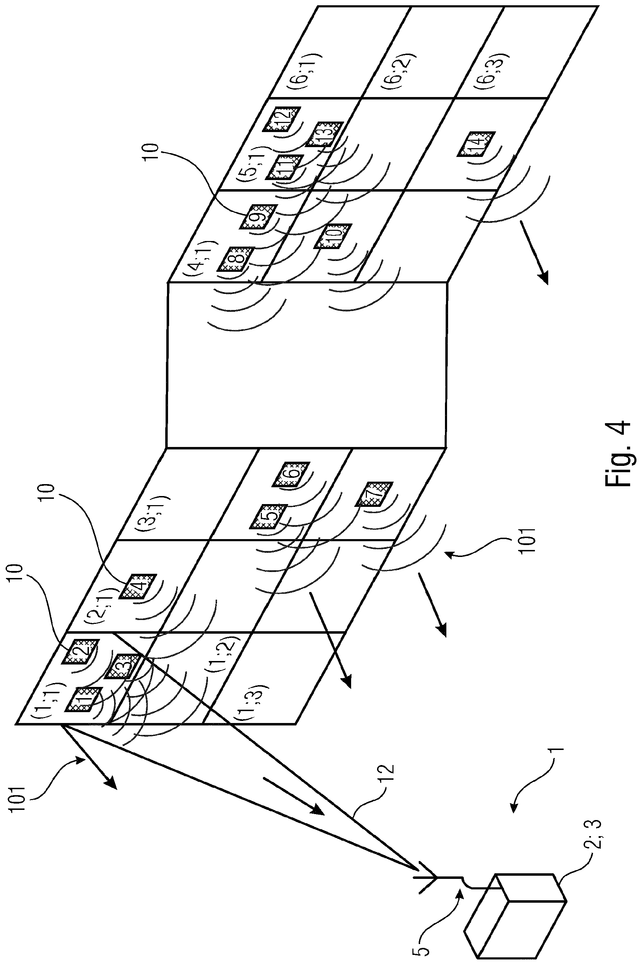

Die Fig. 4 zeigt, wie im Schritt 2 die aufgeweckten Objekte 10 antworten und ihre Antwortsignale 101 senden. Die Antwortsignale 101 umfassen dabei in der dargestellten Ausgestaltung eine Antwortpräambel sowie objektspezifische Informationen wie z. B. ID-Kennung, Seriennummer oder Statusinformationen. Weitere Informationen können auch Sensorwerte oder Daten über letzte besondere Objektereignisse (z. B. Erschütterung) sein.

Zu sehen ist in der Abbildung, dass aus einigen Feldern mehrere Kommunikationsvorrichtungen 10 antworten (hier sind dies die Felder (1; 1), (3; 2), (4; 1) und (5; 1)). Werden also die meisten Antwortsignale 101 dadurch getrennt, dass durch die Richtcharakteristiken der Antennenvorrichtung 5 unterschiedliche Empfangsbereiche 12 geschaltet werden, so ist hier die Trennung der Antwortsignale 101 z. B. über die Identifikations-Trennung möglich.

In einer weiteren Ausgestaltung erfolgt in dem Fall, dass mehrere Objekte 10 nah beieinander angeordnet sind, eine Antwortverzögerung, die z. B. aus der individuellen ID-Kennung abgeleitet wird. Die Verzögerung ergibt sich beispielsweise aus einer 16-Bit-ID-Kennung modulo 5, multipliziert mit der Antwortdauer.

Ein Beispiel: Ein Objekt 10 mit der ID-Kennung 68 antwortet nach 3,50 ms. Ein Objekt 10 mit der ID-Kennung 21 antwortet nach 1,50 ms und ein Objekt 10 mit der Kennung 40 antwortet unmittelbar ohne eine Verzögerung. Durch die Trennung der Zeitpunkte, zu denen die einzelnen Signale aus einem Feld oder einem Empfangsbereich empfangen werden, ergibt sich damit die Trennung hinsichtlich der einzelnen Kommunikationsvorrichtungen 10.

In dem Fall, dass die Objekte 10 den jeweiligen Empfangspegel der Aktivierfunksequenz 100 - z. B. als RSSI-Wert - bestimmen, ist in einer Ausgestaltung vorgesehen, dass eine Anpassung - insbesondere eine Absenkung - der Sendeleistung für die zu leistende Funkantwort aus Gründen der Stromersparnis, längeren Batterielaufzeit und auch geringerer Nebenaussendungen zu Nachbarn erfolgt.

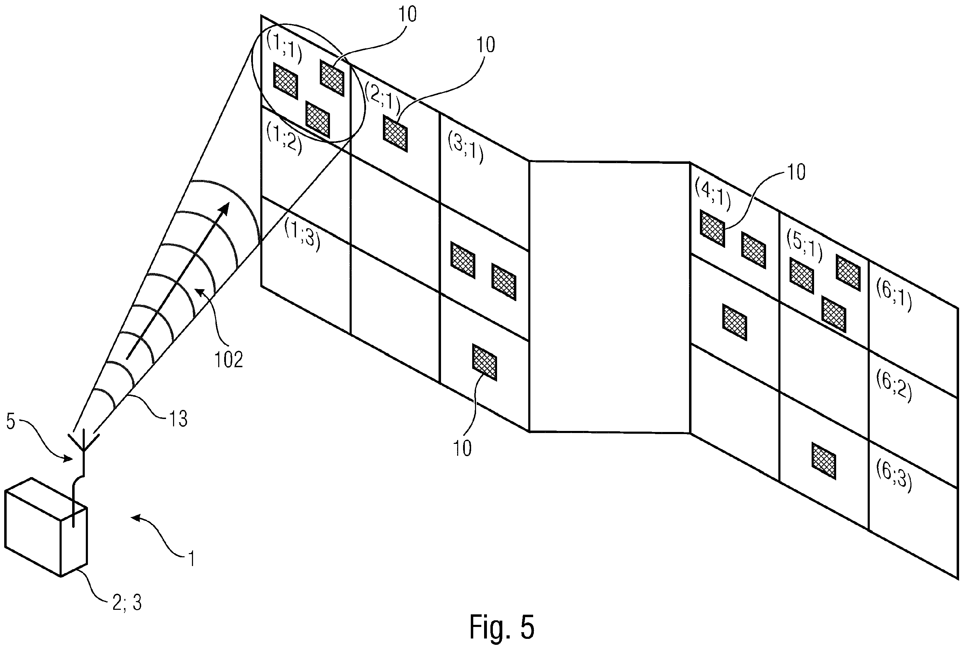

Die den Schritt 3 darstellende Fig. 5 zeigt die gezielte Kommunikation der Vorrichtung 1 mit den Objekten 10 eines Feldes (1; 1).

Ausgehend von der Lokalisierung und Identifizierung der Kommunikationsvorrichtungen 10 kann die zentrale Funkeinheit 1 nun gezielt Objekte 10 in bestimmten Feldern mit gebündelter Strahlrichtung der Antennenvorrichtung 5 adressieren und weitere Kommunikation - ggf. sogar mit höherer Datenrate - abwickeln. Dafür sendet die Sendevorrichtung 3 die Kommunikationssignale 102 aus. Der Empfang von daraufhin von der Kommunikationsvorrichtung des ausgewählten Kommunikationsbereich 13 gesendeten Signalen findet vorzugsweise ebenfalls mit einer ausgesuchten Richtcharakteristik statt. In einer Ausgestaltung wird für den Empfang der weiteren Signale die gleiche Richtcharakteristik verwendet.

Eine mögliche Reduktion der auszuleuchtenden Felder auf eine deutlich kleinere Untermenge ist für eine bestimmte Dauer sinnvoll, z. B. von 6 * 8 auf beispielsweise 12 Felder. Eine feldweise Aussendung der Feldkoordinaten (Ortsinformation) durch die zentrale Funkeinheit 1 an die Objekte 10 in den jeweiligen Feldern führt zur individuellen Kenntnis des Aufenthaltsorts bei den Objekten 10.

Multihop-Verfahren bei der Bildung von ad-hoc-Sensornetzwerken und die schnelle Feststellung von Nachbarschaftsverhältnissen unter den Objekten 10 ist durch diese Information (die Propagation der Ortsinformation durch die gebündelte, feldweise Funksendung) effizient möglich. Unter Mulithop-Verfahren versteht man dabei das Übertragen von Datenpakete über mehrere Zwischenstationen hinweg. In einer Ausgestaltung kommunizieren somit die Kommunikationsvorrichtungen 10 miteinander.

Nach der bestimmten Dauer kann wieder eine vollständige Feldausleuchtung aller m * n Felder erfolgen und das Verfahren im Schritt 1 erneut begonnen werden.

Die zeitliche Häufigkeit des Verfahrens nach Schritt 1 bis 3 gibt die mögliche Aktualisierungsrate der detektierten Objekte 10 bzw. deren Anwesenheit und Identität vor. Auch Bewegungsvorgänge von Objekten 10 können so erfasst und detektiert werden, etwa wenn ein Objekt 10 nach und nach verschiedene Felder durchläuft und für das Verfahren nach Schritt 1 bis 3 entsprechend antwortet. Indirekt kann somit sogar auf die Bewegungsrichtung innerhalb der Felder (bzw. einer Projektion) und auf die Objektgeschwindigkeit geschlossen werden.

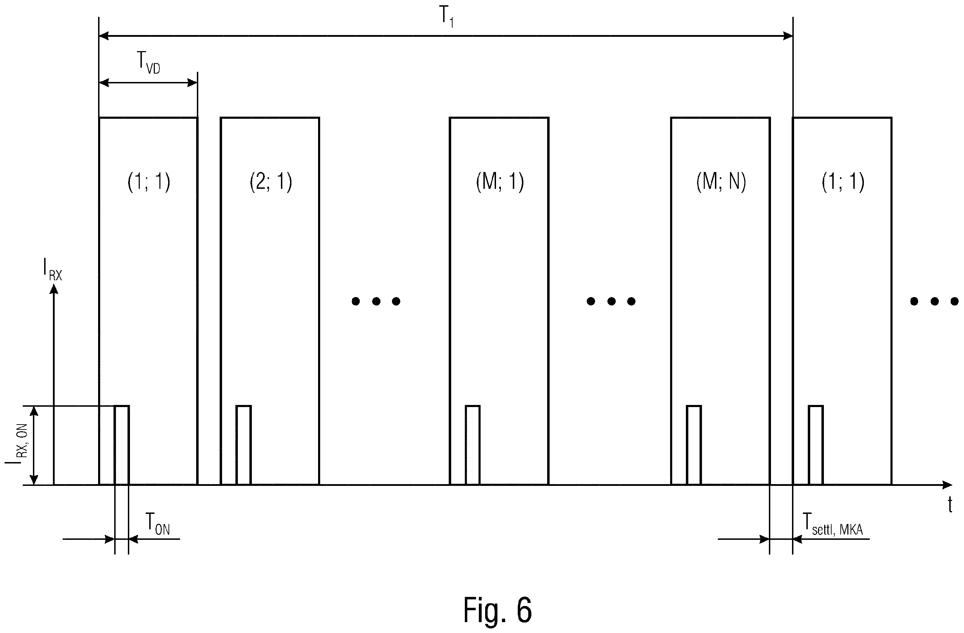

Die Fig. 6 zeigt ein Ausführungsbeispiel für einen zeitlichen Ablauf des Felddurchlaufs mit kurzer Abtastung. Es folgen auch ein paar beispielhafte Zahlenwerte.

Dargestellt ist die Abtastung der M * N Felder mit Koordinaten (i; j), wobei i = 1, ..., M und j = 1, ..., N. Die Abtastung aller Felder findet innerhalb der Zeitdauer $T_1$ statt.

Die Kommunikationsvorrichtungen 10 senden ihre Antwortsignale mit einer bestimmten Datenrate $1/T_b$ oder langsamer aus, z. B. 1 kbps. Die zentrale Funkeinheit empfängt innerhalb der Verweildauer $T_{VD}$ die Funksignale aus dem über die Richtcharakteristik ausgewählten Feld (i; j). Die Verweildauer $T_{VD}$ - also die Zeit, für die eine Richtcharakteristik aktiv und daher Signale aus dem Empfangsbereich empfangen werden - beträgt in der gezeigten Ausgestaltung höchstens:

$$T_b/(m * n).$$

Die Symboldauer $T_b$ als Dauer der Antwortsignale betrage 1 ms. Dabei werden mit den Richtcharakteristiken M * N = 10 * 10 Felder abgetastet.

Die Verweildauer $T_{VD}$ des Empfangsbereichs - also des Beams - auf jedem Feld beträgt:

$$T_{VD} = T_b/(M * N) - T_{settl,MKA}.$$

Dabei ist $T_{settl,MKA}$ die Einstellzeit für die Richtcharakteristik pro Feld. Hier sei $T_{settl,MKA}$ = 100 ns. Damit ergibt sich $T_{VD}$ = 1 ms/100 - 100 ns = 10 $\mu$s - 100 ns = 9,9 $\mu$s.

Weiterhin ist noch die Einschaltdauer der Empfangsvorrichtung $T_{ON}$ eingetragen. In dieser Zeit werden die Antwortsignale während des Verweilens des Beams - also z. B. der Keule der jeweils geschalteten Richtcharakteristik - im Feld (i; j) empfangen. Die Einschaltdauer ist vorzugsweise sehr kurz (insbesondere $T_{ON} << T_{VD}$, z. B. $T_{ON}$ = 100 ns), so dass auf der Seite der Empfängervorrichtung Energie eingespart werden kann. Dies hat dann den Vorteil einer hohen Betriebsdauer. Gleichzeitig erlaubt eine stromsparende Empfängervorrichtung z. B. auch die Anwendung im Heimbereich bzw. ist allgemein eher wartungsarm.

In der Zeit $T_{ON}$ wird eine Signalprobe empfangen und verarbeitet. Dies kann in Form von Amplituden-, Frequenz- oder Phasendemodulation geschehen. Vorzugsweise wird die Amplitude des Empfangssignals innerhalb $T_{ON}$ verarbeitet, weil dies häufig stromsparend erfolgen kann (vergleichbar einem Diodendetektor).

Insbesondere sei $T_{ON}/T_0 \ll 1$ und möglichst $T_{ON}/T_0 <= 1 \%$. Dabei ist die Zeit $T_0$ gegeben durch: $T_0 = T_{VD} + T_{settl,MKA} = T_b/(M * N)$. Es handelt sich also um die Zeit zwischen jeweils zwei abgetasteten Feldern.

Die Empfangsvorrichtung der Vorrichtung zur Kommunikation bzw. der zentralen Funkeinheit habe als ON-Strom - also als Strombedarf für den Empfang und die Verarbeitung von empfangenen Signalen - den Wert: $I_{RX,ON}$.

Damit ergibt sich als mittlere Stromaufnahme der Kommunikationsvorrichtung:

$$\overline{I_{RX}} = \frac{T_{ON}}{T_0} \cdot I_{RX,ON} = \frac{T_{ON} \cdot M \cdot N}{T_B} \cdot I_{RX,ON}$$

Sei $I_{RX,ON} = 1$ mA. Dann ergibt sich beispielswiese für $T_{ON} = 100$ ns und $T_0 = 10\ \mu s$ eine mittlere Stromaufnahme $\overline{I_{RX}}$ von 10 $\mu$A. Dies erlaubt es, batteriebetriebene Kommunikationsvorrichtungen mehrere Jahre zu betreiben.

Eine weitere Variante zur Beschleunigung des Verfahrens bzw. zum Einsparen von Energie ermöglicht die folgende Ausgestaltung:

Für den Fall, dass bereits die interessierenden Objekte bzw. die zugehörigen Felder (x; y) durch die Auswertung der Präambeln der Antwortsignale ermittelt worden sind, gibt es für das weitere Vorgehen bezüglich der m * n-Feldmatrix mehrere Varianten:

In einer Variante werden mit der bestehenden Abtastrate $f_{MKA,MUX}$ und derselben Datenrate $f_{Abtast,RX}$ die weiteren Felder abgetastet. Dadurch ist eine vollständige, lückenlose Verarbeitung aller möglichen m * n Sendesignale möglich. Es ist kein Synchronisationsaufwand zwischen den sendenden Objekten untereinander oder mit der Empfängervorrichtung bzw. der zentralen Funkeinheit notwendig.

In einer alternativen Variante wird die Anzahl der "ausgeleuchteten" Beams auf die Felder reduziert, die bereits mit der Auswertung der Präambeln der Antwortsignale lokalisiert wurden: Sind z. B. nur fünf Felder identifiziert, könnte der Beam statt auf alle m * n, nun auf die fünf Plätze beschränkt werden. Im Falle der 10 * 10 Felder wäre damit eine Erhöhung der Abtastrate $f_{MKA,MUX}$ um den Faktor 100/5 = 20 möglich, was mit einer 20-fachen Datenrate für den Empfänger einhergeht. Nach einem bestimmten Abbruchkriterium (z. B. eine vorgegebene Zeitspanne oder die Tatsache, dass keine Funkdaten aus dem Feld mehr empfangen werden) kann die Reduktion der erfassten Felder wieder aufgehoben werden und die volle m*n-Erfassung, d. h: die Erfassung der Antwortsignale über alle m * n Felder, ablaufen.

Alternativ oder ergänzend wird im Falle des Erkennens einer Präambelsequenz innerhalb der m * n Felder die Verweildauer $T_{VD}$ des Beams pro Feld verkürzt, z. B. von 10 $\mu$s auf 1 $\mu$s, womit eine häufigere Erfassung, d. h. eine höhere Datenrate $1/T_b$ möglich wird. Dabei gehen keine Sendedaten anderer Objekte aus dem Feld verloren. Nach einem bestimmten Abbruchkriterium (beispielweise eine vorgegebene Zeitspanne oder der Zustand, dass keine Funkdaten aus dem Feld mehr empfangbar sind), kann wieder die ursprüngliche, niedrigere Abtastrate $f_{MKA,MUX}$ eingestellt werden. Dies erlaubt einen stromsparenden Empfang der Antwortsignale, indem nur bei tatsächlichem Bedarf die Sendedaten mit höherer Datenrate empfangen werden. $\overline{I_{RX}}$ wird meist nur wenig erhöht.

Nach Ablauf der Verweildauer $T_{VD}$ wird das nächste Feld durch den Beam angesteuert. Dazu wird die Antenne auf eine andere Richtcharakteristik umgeschaltet. Die Reihenfolge der angepeilten m * n Felder kann regelmäßig auf- oder absteigend sein, zufällig oder heuristisch erfolgen.

Das Verfahren wird für alle Felder ausgeführt und erfordert höchstens so viel Zeit wie ein Datenbit lang ($T_b$) ist. Damit gehen keine Sendedaten verloren.

Nach Erfassung aller m * n Felder wird das Verfahren für das nächste Datenbit wiederholt. Somit sind in den m * n Datenpuffern der Empfangsvorrichtung bzw. der zentralen Funkeinheit die empfangenen Bitfolgen abgelegt.

Bei Bedarf wird das Verfahren in einer Ausgestaltung überabtastend eingesetzt, d. h. es wird pro Feld mehr als eine Probe genommen, z. B. vier Abtastproben. Dazu muss die Verweildauer entsprechend viermal kürzer gewählt werden. Die Datenverarbeitungseinheit läuft mit Bittakt $1/T_b$ und kann verzögerungsarm die Detektion bestimmter Präambeln oder Korrelationsmuster vollziehen, um die tatsächlich erfolgte Antwort des jeweiligen Objektes mit gewisser Sicherheit feststellen zu können.

In diesem Fall können mehrere Schlüsse gezogen werden:

Im jeweiligen Feld hat ein Objekt die Aktivierungsfunksequenz in Form des Aktivierungssignals erfolgreich empfangen, decodiert und ein Antwortsignal gesendet. Es ist somit auch gleich die Feldposition (i; j) bekannt. Damit kann beispielsweise in einem Zwischenspeicher das Vorhandensein von Funk-Objekten vermerkt werden. Zusammen mit der nachfolgend vom Objekt ausgesendeten Identitätskennung (ID) kann die Zuordnung Feldposition (i; j) und Objekt-ID erfolgen. Damit ist das Objekt aus Sicht einer von der zentralen Funkeinheit ausgehenden Winkelschätzung lokalisiert.

Falls mehrere Vorrichtungen nebeneinander eingesetzt werden, kann durch geschickte Anordnung mit sich zumindest teilweise überlappenden Winkelfeldern auf den Ort im Raum geschlossen werden. Für den Fall von nur einer eingesetzten Vorrichtung kann zusammen mit der Empfangsfeldstärke oder einer als "Received Signal Strength Indicator" (RSSI) abgeleiteten Maßzahl auf die Entfernung innerhalb eines Winkelfeldes geschlossen werden. Falls eine RSSI-Detektion ohne Funkhindernisse zu Kalibrierzwecken mit der eingesetzten Vorrichtung möglich ist, kann so auf die Entfernung bzw. auf etwaige Hindernisse oder Abschattungen im Winkelfeld geschlossen werden.

Der durch Strahlbündelung im Beam erzielbare Richtgewinn kann sowohl sendeseitig als auch empfangsseitig genutzt werden, z. B. durch reduzierte Sendeleistung bzw. durch verminderte Mindestempfindlichkeit in der Empfangsvorrichtung. Daneben ist die gerichtete Kommunikation im Sinne von "Space Diversity" möglich mit geringen oder sehr geringen Nebenaussendungen außerhalb der jeweiligen Hauptkeule der einzelnen Richtcharakteristiken. Letzteres insbesondere für den Fall, dass es sich bei der Antennenvorrichtung um eine Mehrkeulenantenne handelt, bei der die Richtcharakteristiken jeweils eine dominante Keule aufweisen.

Die Vorrichtung ist insbesondere günstig für den Betrieb ausgeführt, wenn in den Objekten und in der zentralen Funkeinheit stromsparende Funkempfänger mit geringer Reaktionszeit, z. B. Wake-Up-Receiver-Schaltungen o.ä. eingesetzt werden. So seien beispielsweise die Empfängervorrichtungen gemäß der DE 10 2009 047 199 A1 genannt. Sind daher sowohl die Kommunikationsvorrichtungen als auch die zentrale Funkeinheit entsprechend energiesparend ausgestaltet, dann können auf Objektseite, aber auch auf der Seite der zentralen Funkeinheit batteriebetriebene Implementierungen wartungsarm mit Betriebsdauern von Jahren vorgesehen sein.

Im Sonderfall, dass das Verfahren nach Schritt 1 nur relativ selten, z. B. alle 2 Minuten ausgeführt wird, jedoch der Empfangsfall mit dem abtastenden Erfassen aller m * n Felder mittels stromsparendem Funkempfänger (Schritt 2) die meiste Zeit vorliegt, kann die Stromaufnahme im Wesentlichen auf den Empfängerstromverbrauch auf Seite der zentralen Funkeinheit als auch auf Objektseite reduziert werden.

Das Abtastverfahren erlaubt außerdem das spontane Aussenden von Funktelegrammen auf Objektseite. Eine Koordination oder Synchronisation kann entfallen. Falls Objekte nur ereignisgesteuert Funkmeldungen absenden, ist die erhöhte Stromaufnahme auf Objektseite nur abhängig von der Häufigkeit solcher Ereignisse. Eine numerische Begrenzung der Objektzahl besteht prinzipiell nicht. Eine Erweiterbarkeit oder Veränderbarkeit bei der Objektanzahl ist jederzeit möglich.

Das Verfahren ist sehr verzögerungsarm ausgeführt und erlaubt eine zügige Detektion von Objektereignissen und stellt eine deutliche technische Verbesserung von drahtlosen Funksystemen zur Umsetzung von vernetzten Objekten im Sinne eines "Internet der Dinge" dar.

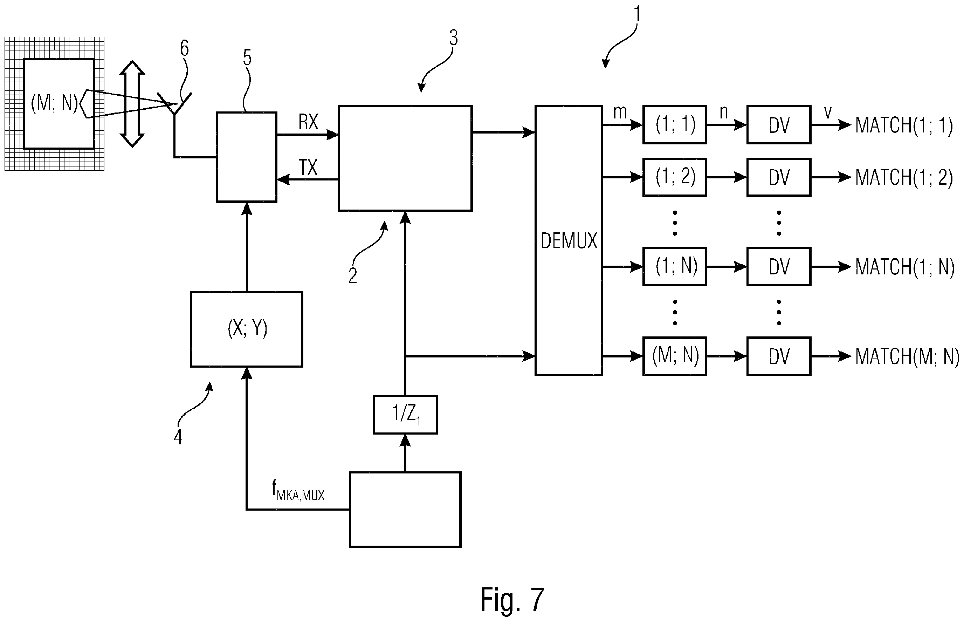

Die Fig. 7 zeigt eine Ausgestaltung eines Aufbaus der zentralen Funkeinheit 1 mit Antennensteuerung, Abtasteinheit und Datenverarbeitung.

Dabei verfügt die Antennenvorrichtung 5 über mehrere Antennenvorrichtungen 6, von denen hier nur eine dargestellt ist, und ist mit einer Vorrichtung verbunden, die hier als Empfangsvorrichtung 3 - dargestellt über den mit RX bezeichneten Pfeil - und als Sendevorrichtung 2 - dargestellt mit dem mit TX bezeichneten Pfeil - fungiert. Dabei handelt es sich vorzugsweise um eine stromsparende Sende-/Empfangsvorrichtung, die hier als abtastender ASK-/OOK-demodulierender Funkempfänger arbeitet. Alternativ wird Frequenzumtastung (Frequency Shift Keying, FSK) für die Datenübertragung verwendet.

Die Steuervorrichtung 4 wählt die einzelnen Richtcharakteristiken der Antennenvorrichtung 5 aus und bestimmt daher die (x; y)-Koordinaten der Felder, die mit den Richtcharakteristiken verbunden sind und aus denen (Antwort-)Signale empfangen bzw. in die (Kommunikations- oder Aktivierungs-)Signale gesendet werden. Zudem erhält die Steuervorrichtung 4 noch von einer Taktquelle die Frequenz $f_{MKA,MUX}$ für die Abtastung der Felder, d. h. für das Schalten der Richtcharakteristiken, um die einzelnen Empfangsbereiche zu erhalten. Die damit verbundene Datenrate $f_{Abtast,RX}$ wird in der dargestellten Ausgestaltung der Sende-/Empfangsvorrichtung und als Abtastfrequenz dem Demultiplexer zugeführt.

Die empfangenen Daten, z. B. in Form von ASK-/OOK-Daten oder FSK-Daten, lassen sich als binärer Datenstrom mit der Wortbreite n beschreiben. Der einfachste Fall der Wortbreite 1 Bit liegt z. B. bei einfacher 2-ASK- oder OOK-Demodulation vor.

Die Daten werden auf einen Demultiplexer (hier bezeichnet mit DEMUX) mit n Ausgängen gegeben, die jeweils mit einem von insgesamt n Empfangsdatenpuffern und einem jeweils zugeordneten Datenverarbeitungseinheit DV verbunden sind. Die detektierten Bits der empfangenen Signale werden somit sortiert und in einem Datenpuffer für die M * N Empfangsbitfolgen der jeweiligen Länge L abgelegt. Die M * N Empfangsdatenpuffer sind z. B. als Schieberegister der Länge L mit der Wortbreite n ausgeführt. Der Einfachheit halber seien diese gleichartig ausgeführt.

Die Datenverarbeitungseinheiten DV erzeugen jeweils einen Match (i; j), zugeordnet zu den einzelnen Feldern (i; j). Dies erfolgt beispielsweise als Mustererkenner mit oder ohne Fehlertoleranz, um jeweils die Antwortpräambel der jeweiligen Kommunikationsvorrichtung mit gewisser Sicherheit zu erkennen. Die Datenverarbeitungseinheiten DV führen eine Datencodierung oder Datenanalyse durch. Zur schnellen Lokalisierung wird in einer Ausgestaltung eine Korrelationsanalyse als digitale Berechnung der Kreuzkorrelation zur Bestimmung der Ähnlichkeit einer ausgesendeten Identifikationssequenz mit jeweils einer Referenzsequenz verwendet. Die Datenverarbeitungseinheiten DV liefern z. B. einen decodierten Datenstrom oder z. B. ein digitales Signal der Wortbreite v - bezeichnet als MATCH(m;n) - zur Anzeige der Übereinstimmung von Sende- und Referenzsequenz.

Wird als Sendesequenz - also als Antwortsignal - eine für die Kreuzkorrelationsanalyse geeignete Sequenz (z. B. wenn die Autokorrelationsfunktion der Referenzsequenz einem zeitdiskreten Dirac-Impuls ähnlich ist) verwendet, so kann die erfolgreiche Übereinstimmung von Sende- und Referenzsequenz leicht und empfangsfehlertolerant digital ermittelt werden. Das jeweilige MATCH(m;n)-Signal kann in diesem Fall als rein binäres Signal erzeugt werden, wenn ein numerischer Vergleich eines Übereinstimmungsmaßes mit einer Entscheidungsschwelle zugrunde gelegt wird. Die ausgesendete Sequenz kann als Zusammensetzung von Präambel zur Korrelation und Datenteil ausgebildet sein.

In dieser Ausgestaltung wird die Funkantwort der Kommunikationsvorrichtungen aus dem Bereich mit m * n Feldern als 2-ASK-moduliertes (Amplitude-Shift Keying oder Amplitudenumtastung, wobei die Amplitude der Trägersignale für die Übertragung von Daten verändert wird) Antwortsignal gesendet. In einem Sonderfall geschieht dies als On-Off-Keying (OOK). Beim On-Off Keying wird das Trägersignal angeschaltet und ausgeschaltet, um eine logische 1 bzw. eine logische 0 zu übertragen. Für diesen Fall der Modulation kann die Demodulation im Empfänger durch einfache Entscheidung mit analogen Komparatoren erfolgen.

Der Empfang und die Detektion des Datenbits der Dauer $T_b$ ausgehend von einem Objekt innerhalb des Feldes (i; j) kann auf diese Weise bereits nach der Einschaltzeit $T_{ON}$ erfolgen (siehe Fig. 6).

Hierbei sei noch einmal mit anderen Worten der zeitliche Ablauf der Lokalisierung erläutert:

Der im Zeilensprungverfahren gerichtete Beam der Vorrichtung 1 mit einer Mehrkeulenantenne als Antennenvorrichtung 5 tastet die M * N Felder (hier z. B. 10 x 10) innerhalb einer Symboldauer (hier 1 ms) in 100 Schritten mit 10 μs ab und stellt jeweils das Antennenempfangssignal einem stromsparenden Abtastfunkempfänger zur Verfügung. Dieser nimmt eine "kurze Probe" vom HF-Signal innerhalb der Beam-Verweildauer $T_{VD}$ (9,9 μs) mit der Empfänger-Einschaltdauer $T_{ON}$ (hier z. B. 100 ns).

Dieses Sample wird ASK-/OOK-demoduliert dem 1-zu-(M * N)-Demultiplexer zur weiteren digitalen Signalverarbeitung zugeführt. Es gibt M * N Schieberegister (bezeichnet mit (1; 1) bis (M; N)) zum Zwischenspeichern der Empfangsdatensamples. Zu jedem der M * N Schieberegister gibt es eine Sequenz- bzw. Präambelerkennung, die z. B. als digitaler Kreuzkorrelator der Länge 31 Bit ausgeführt sein kann. Dies geschieht über die Datenverarbeitungseinheiten DV.

Wird für den jeweiligen der M * N Datenvektoren die vereinbarte Präambel fehlertolerant erkannt, so ist automatisch und verzögerungsfrei die (x; y)-Position innerhalb der M * N - Feldmatrix bekannt: die Winkelschätzung ist durch die vereinbarte Zuordnung Beamstrahlwinkel und Matrixzuordnung vollzogen.

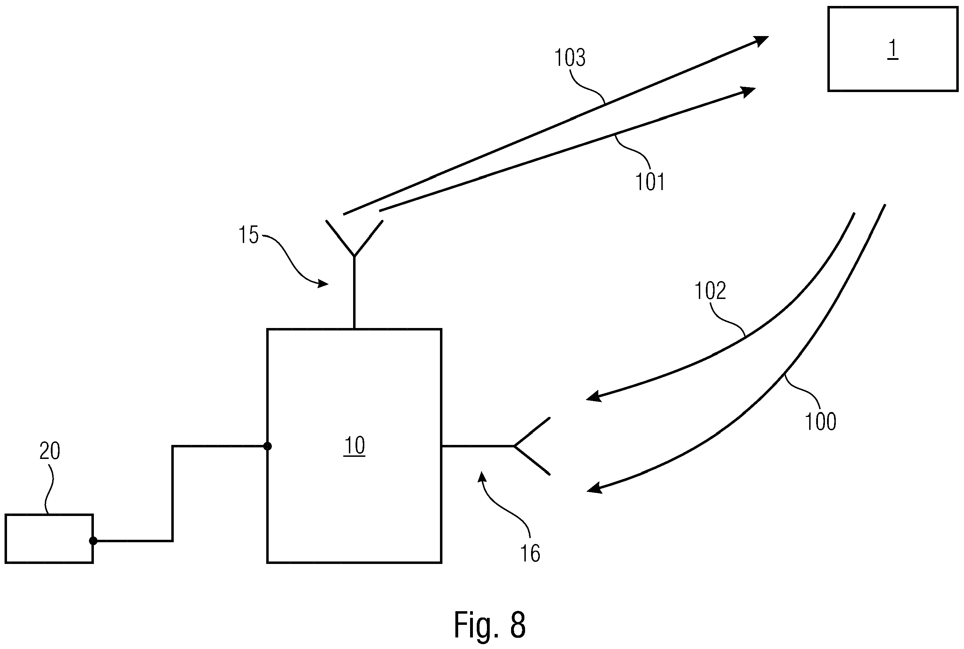

Die Fig. 8 zeigt schematisch eine Kommunikationsvorrichtung 10, die über eine Aussendevorrichtung 15 und eine Detektionsvorrichtung 16 verfügt, die hier zwei Antennenelemente einer Antennenvorrichtung sind und auch unterschiedliche Richtcharakteristiken repräsentieren. Die Kommunikationsvorrichtung 10 ist dabei beispielsweise gemäß der Offenbarung der DE 10 2009 047 199 A1 ausgestaltet. In einem einfachen, hier nicht dargestellten Fall, handelt es sich bei der Kommunikationsvorrichtung 10 um einen RFID-Tag oder RFID-Transponder. Ausgehend von dieser stromsparenden Ausgestaltung der Kommunikationsvorrichtung 10 ist in einer Ausgestaltung die Vorrichtung 1 selbst ebenfalls eine solche energiesparende Einheit, wie sie in der DE 10 2009 047 199 A1 offenbart ist. Dabei ist die Vorrichtung 1 jedoch mit der Antennenvorrichtung mit den unterschiedlichen auswählbaren Richtcharakteristiken für das Senden und Empfangen von elektromagnetischen Signalen ausgerüstet.

Mit der Aussendevorrichtung 15 sendet die Kommunikationsvorrichtung 10 ein Initiierungssignal 103 aus, um die Vorrichtung 1 zum Aussenden eines Aktivierungssignals 100 zu veranlassen. Dieses Aktivierungssignal 100 dient hier beispielsweise dazu, dass die Kommunikationsvorrichtung 10 mehr Energie für die weitere bzw. eigentliche Kommunikation erhält. Daraufhin sendet die Kommunikationsvorrichtung 10 ihr Antwortsignal 101 aus, um hier als Beispiel die Messdaten des Sensors 20 zu übertragen. Der Sensor 20 sei dabei beispielsweise ein Temperatursensor.

Im nächsten Schritt sendet die Vorrichtung 1 ein Kommunikationssignal 102 aus, um z. B. weitere Daten mit der Kommunikationsvorrichtung 10 auszutauschen.

Hier geht somit die Sendeinitiative von der Kommunikationsvorrichtung 10 bzw. dem die Kommunikationsvorrichtung 10 aufweisenden - hier nicht dargestellten - Objekt aus. Beispielsweise möchte das Objekt von sich aus die Positionsbestimmung durch die zentrale Funkeinheit 1 initiieren und sendet daher eine Aufwecksequenz oder eine andere geeignete, vorher vereinbarte Sequenz in Form eines Initiierungssignals 103 an die zentrale Funkeinheit 1 ab. Für den Empfang von solchen Initiierungssignalen 103 verfügt in einer Ausgestaltung die zentrale Funkeinheit 2 über eine ungerichtete und vorzugsweise auch omnidirektionale Richtcharakteristik. In einer alternativen Ausgestaltung werden z. B. die vorhandenen keulenförmigen Richtcharakteristiken der Antennenvorrichtung zeilenweise über alle Felder abtastend laufen gelassen.

Beim Empfangen der Initiativnachricht des Objekts stellt die zentrale Funkeinheit 1 die Objektposition (bzw. die Feldkoordinaten) fest. Dies geschieht z. B. durch das Aufspalten der empfangenen Signale gemäß den einzelnen Richtcharakteristiken oder durch das gezielte Schalten der einzelnen Richtcharakteristiken.

Sendet das Objekt 10 auch seine ID als Funknachricht mit aus, dann ist der zentralen Funkeinheit 1 zusätzlich die verknüpfte Information zwischen der Objekt-ID und der Objekt-Feldnummer bzw. dem Objekt-Platz bzw. der erforderlichen Richtcharakteristik bekannt. Dieser Zusammenhang kann bei der zentralen Funkeinheit 1 belassen werden oder - in einer Ausgestaltung - an das Objekt 10 selbst zurückgesendet werden, z. B. als Teil des Kommunikationssignals. Das Vorgehen der Übertragung der Ortsinformation empfiehlt sich beispielsweise, wenn Objekte 10 neu in den Erfassungsbereich der zentralen Funkeinheit 1 dazukommen oder wenn Objekte 10 sich bewegen oder bewegt werden. Dann kann bei mehrfacher Anwendung des Initiierungssignals das Objekt 10 die schrittweise Erfassung der gesamten Bewegung veranlassen oder auch das Verlassen des Erfassungsbereichs schnell feststellen ("Tracking und Tracing").

Das Initiierungssignal wird in einer Ausgestaltung mit dem oben bereits beschriebenen Vorgang des selektiven Aufweckens bzw. Aktivierens verbunden.

So kann z. B. das selektive Aufwecken alle bewegten Objekte betreffen und nur diese Objekte senden die entsprechende Funkantwort zur Ortung durch die zentrale Funkeinheit aus. Damit kann der Funkverkehr auf die bewegten Objekte eingeschränkt werden und alle Positionen (Feldnummern) können laufend und mit geringer Verzögerung ermittelt werden.

Weitere Anwendungsgebiete sind insbesondere Umgebungen, wo eine RFID-basierte Erfassung im Nahbereich (Abstand << 10 m) z. B. aus Platzgründen o. ä. nicht möglich ist.

In einer - nicht dargestellten - Ausgestaltung werden mehrere zentrale Funkeinheiten verwendet, die jeweils Antennenvorrichtungen insbesondere in Form von Mehrkeulenantennen aufweisen. Hiermit lässt sich die Genauigkeit der Ortsschätzung von der reinen Feldnummer auf die Position im Raum verbessern. Zudem werden Redundanz und geringere Schätzfehler bewirkt. So kann beispielsweise mit zwei voneinander abgesetzten zentralen Funkeinheiten die Abschattung durch spontan eingebrachte Hindernisse detektiert werden und trotzdem die Ortsschätzung erfolgen.

Die Anordnung der Objekte bzw. Kommunikationsvorrichtungen kann auch als Matrix oder Satz von Bodenplatten erfolgen sowie als Deckenplatten. Ist jede Boden- oder Deckenplatte mit einem stromsparenden Funkempfänger und einem Funksender sowie einer Rechen- und Steuereinheit - also insgesamt einer Kommunikationsvorrichtung - und optional Sensoren ausgestattet, so können z. B. die Sensoren die Nähe eines beweglichen Gegenstandes oder einer Person detektieren und dann im Sinne der oben beschriebenen Schritte - z. B. durch das Initiierungssignal - die Kommunikation mit der zentralen Funkeinheit initiieren. Somit kann für jede Bodenplatte das Befahren oder Betreten individuell registriert und mit geringer Verzögerung an die zentrale Funkeinheit auch gleichzeitig übermittelt werden. Andere sensorische Ereignisse wie z. B. Beleuchtung oder verminderte Helligkeit durch Abschattung können ebenfalls die Initiierung auslösen.

Die Anordnung der Objekte bzw. der Kommunikationsvorrichtungen erfolgt in einer weiteren Ausgestaltung beispielsweise auf einer großen Fläche wie z. B. Parkplatz, Auslieferungslager, Feld etc. Dabei erlaubt die Erfindung, die Objekte (z. B. ein Transportbehälter, eine Gitterbox, ein Fahrzeug o. ä.) mit jeweils einer Kommunikationseinrichtung 10 in der Gesamtanordnung zu lokalisieren. Dazu dienen je nach Ausgestaltung eine oder mehrere zentrale Funkeinrichtungen 1, deren als Keulencharakteristik abgestrahlte Signale - je nach Ausgestaltung - die gesamte Fläche oder Teilflächen ausleuchten. Für eine höhere Zuverlässigkeit, eine genauere Bestimmtheit bzw. Genauigkeit werden in einer Ausgestaltung mehrere zentrale Funkeinheiten 1 eingesetzt. Diese teilen in einer Ausgestaltung die auszuleuchtende Fläche in mehrere Sektoren auf. Die Kommunikationseinrichtung 10 ist dabei in einer Ausgestaltung von außen an dem jeweiligen Objekt angebracht, z. B. an einem Autodach mit einem Magnet.

Das Verfahren zur Bestimmung der Objekt-Position innerhalb des Feldes durch Ausrichten der keulenförmigen Antennencharakteristik erfolgt bei der vorgenannten Ausgestaltung wie in den vorigen Abschnitten beschrieben. Die Antennen mit veränderbarer keulenförmiger Abstrahlcharakteristik sind je nach Anwendung vorzugsweise in größerer Höhe, z. B. auf Masten oder Hausdächern, aufgestellt, damit eine möglichst freie Sicht zu den Kommunikationseinrichtungen 10 der Objekte besteht und somit größere Reichweiten möglich sind. Das Verfahren dient z. B. zur schnellen Ortung von Objekten, Behältern oder Fahrzeugen (auch Personen oder Lebewesen sind denkbar) auf einer großen Fläche.

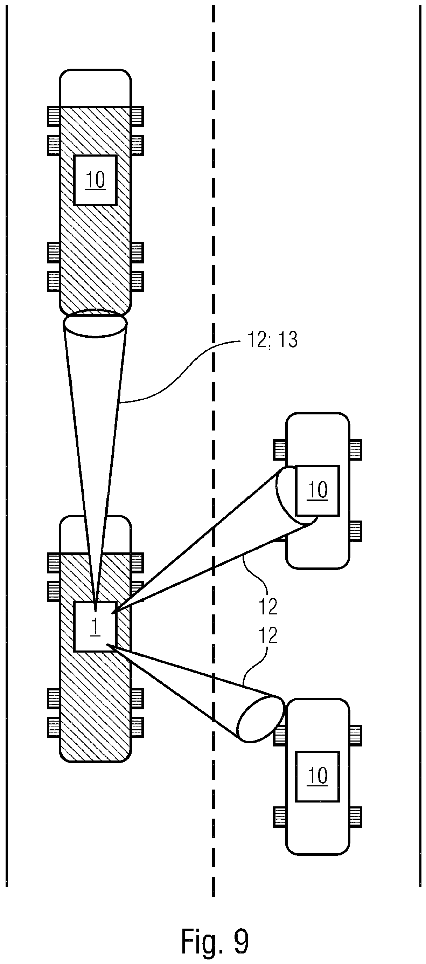

Die Fig. 9 zeigt einen Anwendungsfall, bei dem die Vorrichtung zur Kommunikation bzw. die zentrale Funkeinheit 1 auf einem Fahrzeug, z. B. einem Lastkraftwagen installiert ist.

Weitere Fahrzeuge verfügen über entsprechende Kommunikationsvorrichtungen 10. Die zentrale Funkeinheit 1 kommuniziert mit der Kommunikationsvorrichtung 10, so dass auch der Kommunikationsbereich 13 auf dieses vorausfahrende Fahrzeug gerichtet ist. Dies dient beispielweise der Einstellung bzw. Regelung der Fahrgeschwindigkeiten, um eine konstante Geschwindigkeit beizubehalten. Auf die beiden anderen Kommunikationsvorrichtungen 10 - der hier überholenden PKWs - sind die Empfangsbereiche 12 ausgerichtet. Somit empfängt die Vorrichtung 1 von dort Signale und kann zumindest auch aus der Signalstärke der empfangenen Signale feststellen, ob sich die Objekte noch im Bereich der Empfangsbereiche 12 befinden. Weiterhin kann der Kommunikationsbereich 13 entsprechend auf die anderen Objekte umgelenkt werden, so dass sich auch mit diesen die Kommunikation realisieren lässt.

Dies ist somit ein Beispiel für eine Car-to-Car-Kommunikation und erlaubt, dass Fahrzeuge miteinander oder mit anderen Verkehrsteilnehmern kommunizieren. Über den Kommunikationsbereich 13 ereignet sich insbesondere eine bidirektionale Kommunikation mit einem anderen Fahrzeug, während über die anderen Empfangsbereiche 12 gelauscht wird, welche Fahrzeuge eventuell auch kommunizieren wollen. Davon ausgehend wird entsprechend zwischen den Richtcharakteristiken umgeschaltet. Ein möglicher Frequenzbereich liegt beispielsweise im Wireless-LAN 5,9 GHz-Band.

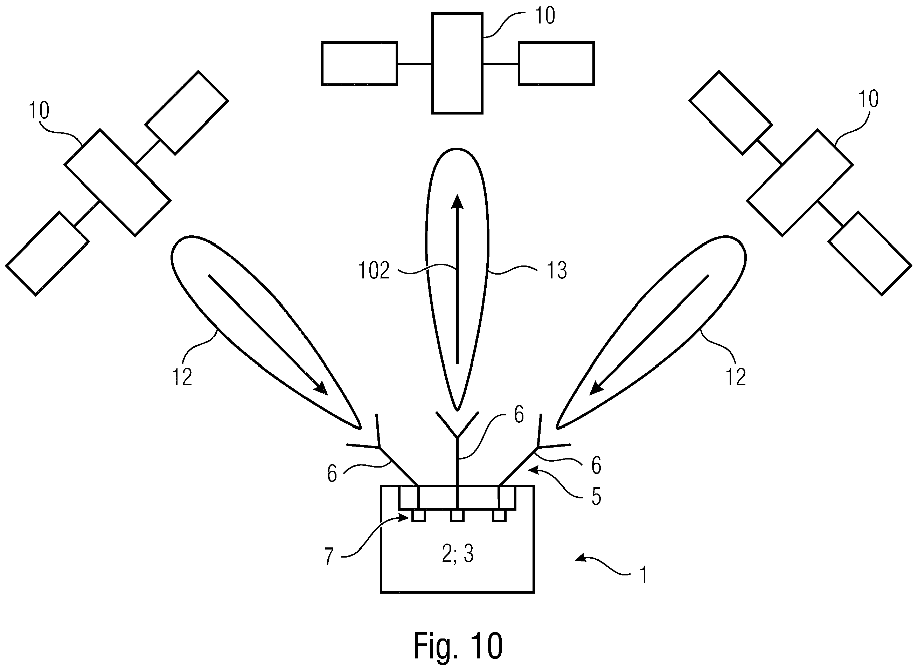

In einer ähnlichen Ausgestaltung - gezeigt in der Fig. 10 - handelt es sich bei den Objekten, die die Kommunikationsvorrichtungen 10 aufweisen bzw. die sogar die Kommunikationsvorrichtungen 10 sind, um Satelliten. Es handelt sich somit um den Fall der Kommunikation zwischen einem Satelliten 10 und der Erde, auf der sich die Vorrichtung 1 befindet, oder zwischen mehreren Satelliten.

Dabei ist sei hier die Antennenvorrichtung 5 als Mehrkeulenantenne mit einem Speisenetzwerk als Steuervorrichtung 4 mit mehreren Toren 7 verbunden.

Die Richtcharakteristik, die dem Kommunikationsbereich 13 zugeordnet ist und die hier der bidirektionalen Kommunikation und zumindest dem Aussenden des Kommunikationssignals 102 dient, ist als Sende-Empfangskeule über ein Tor 7 des Speisenetzwerks 4 in eine bestimmte Richtung gelenkt. An diesem Tor 7 des Speisenetzwerks 4 findet zunächst die bidirektionale Kommunikation zwischen der Vorrichtung 1 (also der zentralen Funkeinheit) und der Kommunikationsvorrichtung in Form des ausgesuchten Satelliten 10 statt. An den anderen Toren 7 wird gelauscht (Empfangsfall), d. h. die anderen Richtcharakteristiken werden als reine Empfangsbereiche 12 verwendet, aus denen nur Signale (angedeutet durch die Pfeile) empfangen und in die keine Signale von der Vorrichtung 1 ausgesendet werden. Über diese anderen Richtcharakteristiken bzw. über die zugeordneten Tore bzw. Signalausgänge 7 des Speisenetzwerks 4 lassen sich weitere Satelliten 10 lokalisiert.

Wird die Verbindung über das Kommunikationstor bzw. die Kommunikationskeule schlechter, so kann auf eine andere Keule bzw. eine andere Richtcharakteristik umgeschaltet werden, welche womöglich eine bessere Kommunikation (z. B. höherer Signalpegel) zu einem anderen Satelliten erlaubt. Somit kann, ohne über die Positionen (sogenannte Almanachdaten) der einzelnen Satelliten Bescheid zu wissen, die Vorrichtung zur Kommunikationsvorrichtung selbstständig die Verbindung mit dem stärksten Signal auswählen. Dabei können jeweils unterschiedliche Frequenzbereiche verwendet werden.

Die Station auf der Erde bzw. die Position der Vorrichtung kann auch ein Fahrzeug sein, welches irgendwo eine oder mehrere Antennen angeordnet hat, welche nachgeführt werden müssen, da sich das Fahrzeug bewegt.

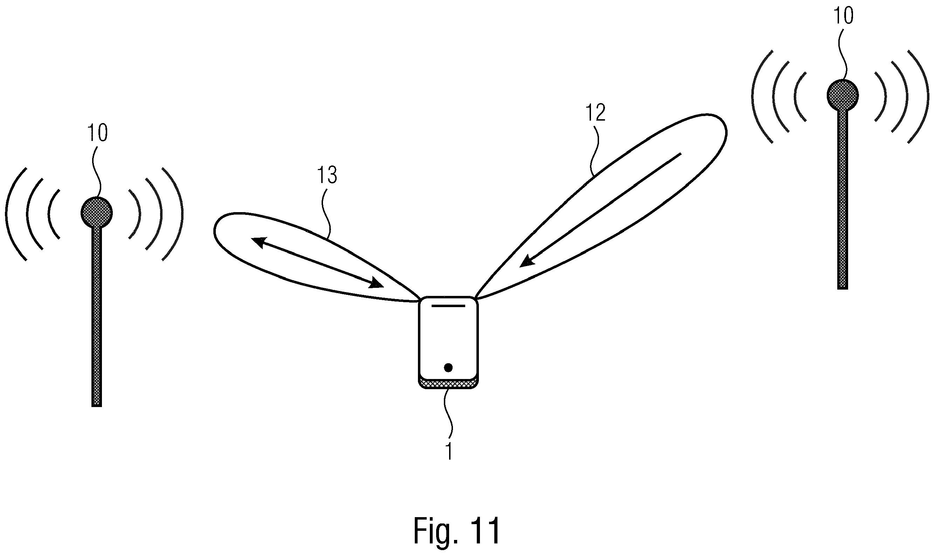

Die Fig. 11 zeigt eine Anwendung im Mobilfunkbereich.

Im Mobilfunk kommunizieren die Clients (z. B. Handy oder Smartphone) mit sogenannten Basisstationen, welche verteilt angeordnet sind. Die Basisstationen sind in der Regel so an einem Mast angeordnet, dass in Summe eine Art Rundstrahlcharakteristik entsteht. Auch der Client besitzt in der Regel eine Rundstrahlantenne. Oft treten aber Verdeckungsfälle bzw. Abschattungen auf.

Das dargestellte Smartphone sei hier die Vorrichtung zur Kommunikation 1 und sei mit einer - nicht dargestellten - Mehrkeulenantenne ausgerüstet. Dies erlaubt die Vorgabe des Kommunikationsbereichs 13 in Richtung eines sogenannten Funkmasts als Ausgestaltung der Kommunikationsvorrichtung 10 sowie des Empfangsbereichs 12 in Richtung eines weiteren Funkmasts 10. Dies erlaubt eine Kommunikation und die gleichzeitige Ermittlung einer - möglicherweise von der Zeit oder z. B. von dem Abstand zu ihr abhängigen - bestimmten Basisstationen 10 mit deutlich höheren Gewinn (Richtwirkung). Damit kann die Reichweite des Smartphones 1 als Vorrichtung zur Kommunikation und letztendlich die Signalverbindung deutlich stabiler gestaltet werden.

Über die eingezeichneten Pfeile ist hier auch angedeutet, dass die Vorrichtung 1 über den Empfangsbereich 12 nur Signale empfängt (einfacher Pfeil in Richtung der Vorrichtung 1) und dass die Vorrichtung 1 über den Korrespondenzbereich Signale sendet und empfängt (Doppelpfeil in beide Richtungen).

Kommt es nun zu Verdeckungsfällen oder zu größeren Abständen zu einer Basisstation 10, so kann ausgehend vom Detektieren der Signalpegel anderer Basisstationen 10 durch die verbleibenden Empfangspfade der Mehrkeulenantenne der Vorrichtung der Beam für die Kommunikation gezielt auf andere Basisstationen 10 geschwenkt werden. So ist es möglich, dass der Beam stets auf die Basisstationen mit der besten Signalstärke ausgerichtet ist.

Bewegt sich hier beispielsweise das Smartphone 1 mehr zur rechten Seite, so bietet die dortige Basisstation 10 einen besseren Empfang.

Vorteile der Erfindung sind beispielsweise eine schnelle Lokalisierung, eine gerichtete Kommunikation oder eine verzögerungsarme und gleichzeitig stromsparende Kommunikation. Letzteres erlaubt aktive Stromverbräuche im μA-Bereich. Daher erlaubt die Erfindung eine Vielzahl an wartungsarmen Anwendungen z. B. im Heimbereich (Internet der Dinge mit Alltagsgegenständen und im Bereich Consumer Electronics/Leisure) sowie in der Logistik und im Vertrieb sowie in Warenhäusern/Lagerhäusern.

Bei mehrfacher Implementierung der Vorrichtung ist eine genaue, fehlertolerante Ortsschätzung im Raum mit Redundanz sowie die Feststellung von Lage und Größe von Hindernissen möglich. Die Kosten zur Implementierung sind gering. Die MKA-Antennenvorrichtung ist mit mehreren PCBs und Antennenumschaltern günstig zu fertigen. Die Ausführung des Funkempfängers als stromsparender Abtastfunkempfänger mit m*n-Demultiplexing ist als massenmarkttaugliches Low-Cost-IC vorgesehen. Die Anzahl an externen Komponenten ist minimal. Die Erweiterbarkeit eines der Erfindung gemäßen Systems auf eine steigende Anzahl von Objekten sowie die Fähigkeit zum Betrieb als Quasi-Echtzeit-Ortungssystem mit Aktualisierungsraten von unter einer Sekunde bei gleichzeitiger Wartungsfreundlichkeit stellen die Erfindung als besonders vorteilhaft dar.

Die Objekte, z. B. Transponder mit stromsparendem Funkempfängern, können mit Sensoren ausgestattet sein. Damit können beispielsweise Temperatur, Druck o. ä. erfasst werden. Die Daten der Sensoren werden nach der Aktivierung des Transponder an die zentrale Funkeinheit an diese übermittelt. Die Daten der Sensoren können auch auf dem Transponder vorverarbeitet werden. Hierzu sind typischerweise aktive Transponder notwendig. Ist der Transponder als stromsparender Funkempfänger ausgestaltet, so ermöglicht dies eine lange Betriebsdauer.

Die Erfindung umfasst - hier bezogen auf eine Ausgestaltung - eine Vorrichtung, bestehend aus einer Sende- und einer Empfangseinheit mit Antennenanpassung, Antennensteuerung sowie einer Antenne mit keulförmiger Richtcharakteristik, die als schaltbare Mehrkeulenantenne ausgeführt ist. Wie beim Zeilensprungverfahren erfolgt die gleichzeitige Kommunikation von vielen beweglichen autarken Objekten mit einer zentralen Funkeinheit durch Ausrichten der Richtcharakteristik für den Abtastvorgang des Funksignals. Der Abtastvorgang ist dabei viel kürzer als die Bitdauer der ausgesendeten Signale. Dadurch können alle Datenpfade parallel ablaufen. Über die Richtcharakteristiken und die damit verbundenen räumlichen Verteilungen der Empfangsempfindlichkeiten sind die Objektorte bzw. genauer: die Orte der zugehörigen Kommunikationsvorrichtungen ebenfalls detektiert.

Anwendungsgebiete liegen im Bereich der Logistik z. B. beim Verwaltung von Objekten innerhalb von Lagerhallen und Produktionsumgebungen oder bei der autonomen Navigation von Flurförderfahrzeugen. Im Bereich der Produktion erlaubt die Erfindung die Verwaltung von Werkstücken und Werkstückträgern und ebenfalls die autonome Navigation von Flurförderfahrzeugen. Es lassen sich auch Sensornetzwerke zur Zustandsüberwachung z. B. von Maschinen aufbauen, deren Daten zentral erfasst und zur Prozessüberwachung genutzt werden können. Jedoch auch im Heimbereich vereinfacht die Erfindung das Suchen, Finden und Verwalten von Gebrauchs-/Alltagsgegenständen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (1) zur Kommunikation mit Kommunikationsvorrichtungen (10),
   wobei die Vorrichtung (1) eine Sendevorrichtung (2), eine Empfangsvorrichtung (3) und eine Steuervorrichtung (4) aufweist,
   wobei die Empfangsvorrichtung (3) derartig ausgestaltet ist, Signale (101, 103) zu empfangen, und
   wobei die Steuervorrichtung (4) derartig ausgestaltet ist, einen Raumbereich (11, 13) vorzugeben, in den die Sendevorrichtung (2) Signale (100, 102) aussendet.

2. Vorrichtung (1) nach Anspruch 1,
   wobei die Sendevorrichtung (2) ein Aktivierungssignal (100) ungerichtet aussendet.

3. Vorrichtung (1) nach Anspruch 1,
   wobei die Steuervorrichtung (4) derartig ausgestaltet ist, einen Aktivierungsbereich (11) vorzugeben, in welchen die Sendevorrichtung (2) ein Aktivierungssignal (100) aussendet.

4. Vorrichtung (1) nach einem der Ansprüche 1 bis 3,
   wobei die Sendevorrichtung (2) derartig ausgestaltet ist, ein Aktivierungssignal (100) mit einer Aufweckkennung für mindestens eine zu aktivierende Kommunikationsvorrichtung (10) auszusenden.

5. Vorrichtung (1) nach einem der Ansprüche 1 bis 4,
   wobei die Steuervorrichtung (4) derartig ausgestaltet ist, der Empfangsvorrichtung (3) unterschiedliche Empfangsbereiche (12) für das Empfangen von Signalen (101, 103) vorzugeben.

6. Vorrichtung (1) nach einem der Ansprüche 1 bis 5,

wobei die Empfangsvorrichtung (3) eine Antennenvorrichtung (5) aufweist,
wobei die Antennenvorrichtung (5) mehrere Richtcharakteristiken aufweist, die sich auf räumlich unterschiedliche Empfangsempfindlichkeiten beziehen, und wobei die Empfangsvorrichtung (3) derartig ausgestaltet ist, die empfangenen Signale (101, 103) den Richtcharakteristiken zuzuordnen.

**7.** Vorrichtung (1) nach einem der Ansprüche 1 bis 6,
wobei die Steuervorrichtung (4) derartig ausgestaltet ist, einen Kommunikationsbereich (13) vorzugeben, in welchen die Sendevorrichtung (2) ein Kommunikationssignal (102) aussendet.

**8.** Vorrichtung (1) nach einem der Ansprüche 1 bis 7,
wobei die Steuervorrichtung (4) derartig ausgestaltet ist, in dem Fall, dass die Empfangsvorrichtung (3) von einer Kommunikationsvorrichtung (10) ein Initiierungssignal (103) empfängt, einen Kommunikationsbereich (13) in Abhängigkeit von einer Position der das Initiierungssignal (103) aussendenden Kommunikationsvorrichtung (10) vorzugeben, in welchen die Sendevorrichtung (2) ein Kommunikationssignal (102) aussendet.

**9.** Vorrichtung (1) nach einem der Ansprüche 1 bis 8,
wobei die Empfangsvorrichtung (3) derartig ausgestaltet ist, für einen vorgebbaren Zeitraum ($T_{VD}$) Signale (101, 103) zu empfangen, und
wobei der Zeitraum ($T_{VD}$) in Abhängigkeit von einer Datenrate ($1/T_b$), mit der die Kommunikationsvorrichtungen (10) Signale aussenden, und/oder in Abhängigkeit von einer Anzahl der Empfangsbereiche (12), aus denen die Empfangsvorrichtung (3) Signale empfängt, vorgegeben ist.

**10.** Vorrichtung (1) nach Anspruch 9,
wobei der vorgebbare Zeitraum ($T_{VD}$) für das Empfangen der Signale (101, 103) kleiner ist als die Bitdauer ($T_b$) und wobei insbesondere der vorgebbare Zeitraum ($T_{VD}$) kleiner ist als die Bitdauer ($T_b$) geteilt durch die Anzahl der Empfangsbereiche (12).

**11.** Vorrichtung (1) nach einem der Ansprüche 1 bis 10,
wobei die Empfangsvorrichtung (3) derartig ausgestaltet ist, aus mindestens einem empfangenen Signal (101, 103) eine Identitätskennung betreffend der Kommunikationsvorrichtung (10) zu bestimmen, von der das empfangene Signal (101, 103) stammt.

**12.** Vorrichtung (1) nach einem der Ansprüche 1 bis 11,
wobei die Sendevorrichtung (2) und/oder die Empfangsvorrichtung (3) mehrere auswählbare unterschiedliche Richtcharakteristiken (8) aufweisen bzw. aufweist, und
wobei die Richtcharakteristiken (8) sich jeweils auf eine Menge an räumlich unterschiedlichen Sendeeigenschaften bzw. Empfangsempfindlichkeiten beziehen.

**13.** Vorrichtung (1) nach einem der Ansprüche 1 bis 12,
wobei die Sendevorrichtung (2) und/oder die Empfangsvorrichtung (3) eine Antennenvorrichtung (5) aufweisen bzw. aufweist, und
wobei die Antennenvorrichtung (5) als Mehrkeulenantenne ausgestaltet ist.

**14.** Vorrichtung (1) nach einem der Ansprüche 1 bis 13,
wobei die Sendevorrichtung (2) und die Empfangsvorrichtung (3) als eine Komponente ausgeführt sind.

**15.** Kommunikationsvorrichtung (10)
mit einer Aussendevorrichtung (15) und einer Detektionsvorrichtung (16), wobei die Aussendevorrichtung (15) derartig ausgestaltet ist, Signale (101, 103) auszusenden,
wobei die Detektionsvorrichtung (16) derartig ausgestaltet ist, Signale (100, 102) zu empfangen, und
wobei die Aussendevorrichtung (15) derartig ausgestaltet ist, die Signale (101, 103) derartig auszusenden, dass die Signale (101, 103) die Bestimmung mindestens einer Identitätskennung betreffend der Kommunikationsvorrichtung (10) erlauben.

**16.** Kommunikationsvorrichtung (10) nach Anspruch 15,
wobei die Aussendevorrichtung (15) derartig ausgestaltet ist, ein Initiierungssignal (103) auszusenden, um eine Kommunikation mit einer Vorrichtung (1) zur Kommunikation zu initiieren.

**17.** Kommunikationsvorrichtung (10) nach Anspruch 15 oder 16,
wobei die Kommunikationsvorrichtung (10) derartig ausgestaltet ist, nach dem Empfang eines Aktivierungssignals (100) mindestens ein Antwortsignal (101) auszusenden.

**18.** Kommunikationsvorrichtung (10) nach einem der Ansprüche 15 bis 17,
wobei die Kommunikationsvorrichtung (10) derartig ausgestaltet ist, nach dem Empfang eines Aktivierungssignals (100) von einem passiven Zustand in einen aktiven Zustand zu wechseln.

**19.** Kommunikationsvorrichtung (10) nach einem der Ansprüche 15 bis 18,
wobei die Kommunikationsvorrichtung (10) mindestens einen Sensor (20) aufweist, und
wobei die Aussendevorrichtung (15) derartig ausgestaltet ist, ein Signal mit einem Messwert des Sensors (20) auszusenden.

**20.** Verfahren zur Kommunikation zwischen einer Vorrichtung (1) zur Kommunikation und mindestens einer Kommunikationsvorrichtung (10),
wobei ein Aktivierungssignal (100) von der Vorrichtung (1) an die Kommunikationsvorrichtung (10) oder ein Initiierungssignal (103) von der Kommunikationsvorrichtung (10) an die Vorrichtung (1) ausgesendet wird, und
wobei in einen Kommunikationsbereich (13) ein Kommunikationssignal (102) von der Vorrichtung (1) an die Kommunikationsvorrichtung (10) ausgesendet wird.

Fig. 1

EP 3 206 412 A1

Fig. 2

Fig. 3

EP 3 206 412 A1

Fig. 4

EP 3 206 412 A1

Fig. 5

Fig. 6

Fig. 7

EP 3 206 412 A1

EP 3 206 412 A1

Fig. 8

12; 13

12

12

Fig. 9

Fig. 10

EP 3 206 412 A1

Fig. 11

Europäisches
Patentamt

European
Patent Office

Office européen
des brevets

## EUROPÄISCHER RECHERCHENBERICHT

Nummer der Anmeldung

EP 17 15 5436

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/012710 A1 (SADR RAMIN [US]) 17. Januar 2008 (2008-01-17) * Absatz [0063] - Absatz [0065] * ----- | 1,3-9, 11-20 | INV. H04Q9/00 |
| X | US 2004/266481 A1 (PATEL JAY [US] ET AL) 30. Dezember 2004 (2004-12-30)  * Absatz [0040] - Absatz [0054] * * Absatz [0093] - Absatz [0099] * ----- | 1-7,9, 11-15, 17,18,20 | |
| X | EP 1 612 579 A2 (OMRON TATEISI ELECTRONICS CO [JP]) 4. Januar 2006 (2006-01-04) * Absatz [0046] - Absatz [0086] * * Absatz [0097] - Absatz [0101] * ----- | 1,3-18, 20 | |

RECHERCHIERTE
SACHGEBIETE (IPC)

G08C
H04Q

Der vorliegende Recherchenbericht wurde für alle Patentansprüche erstellt

| Recherchenort | Abschlußdatum der Recherche | Prüfer |
|---|---|---|
| Den Haag | 15. Juni 2017 | Pham, Phong |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 5436

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2017

| Im Recherchenbericht angeführtes Patentdokument | Datum der Veröffentlichung | Mitglied(er) der Patentfamilie | Datum der Veröffentlichung |
|---|---|---|---|
| US 2008012710 A1 | 17-01-2008 | US 2008012710 A1<br>US 2011090059 A1<br>US 2014292492 A1<br>US 2015326298 A1 | 17-01-2008<br>21-04-2011<br>02-10-2014<br>12-11-2015 |
| US 2004266481 A1 | 30-12-2004 | KEINE | |
| EP 1612579 A2 | 04-01-2006 | AT 404886 T<br>CA 2511104 A1<br>CN 1716696 A<br>EP 1612579 A2<br>EP 1681582 A2<br>ES 2309853 T3<br>JP 2006020083 A<br>KR 20060048593 A<br>US 2006001585 A1 | 15-08-2008<br>01-01-2006<br>04-01-2006<br>04-01-2006<br>19-07-2006<br>16-12-2008<br>19-01-2006<br>18-05-2006<br>05-01-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009047199 A1